# EUROPÄISCHE PATENTANMELDUNG

(11) **EP 3 939 751 A1**
(43) Veröffentlichungstag der Anmeldung: **19.01.2022**
(21) Anmeldenummer: 21169767.7
(22) Anmeldetag: 21.02.2019
(51) Int. Cl.: B25J 9/08, B25J 9/10, F16H 1/16, F16H 55/22, F16H 57/039, F16H 1/22, F16H 19/04, F16H 55/24

(54) **ARMGELENK FÜR EINEN MANIPULATOR UND MANIPULATOR**

(30) Priorität: 15.03.2018 DE 202018101462 U
(62) Teilanmeldung aus: 19707749.8
(71) Anmelder: igus GmbH, 51147 Köln (DE)
(72) Erfinder: RAAK, Martin, 50968 Köln (DE); BERGER, Felix, 50679 Köln (DE)
(74) Vertreter: Lippert Stachow Patentanwälte Rechtsanwälte

(57) **Zusammenfassung**

Ein Armgelenk für einen Manipulator (M), der einen Motor (5) mit einem Getriebe (G) aufweist, schließt ein um eine Getriebedrehachse (g) drehbares Getrieberad (2) ein, wobei das Getrieberad (2) in einem Gehäuse (3) des Armgelenks (1) drehbar gelagert angeordnet ist und an zumindest einer seiner Stirnseiten (21) einen Adapter (22) aufweist und wobei der Adapter (22) an seiner von der Stirnseite (21) des Getrieberades (2) abgewandten Seite (23) eine bezüglich der Getriebedrehachse (g) zentrale Öffnung (24) aufweist. Es wird als Vorteil angesehen,dass das Getrieberad und/oder das weitere Getriebeelement jeweils spielfrei zum Gehäuse sowie/oder dass das Getrieberad und das weitere Getriebeelement spielfrei ineinander wirkend anordenbar sind. Dank der Spielfreiheit kann eine hohe Laufruhe und ein verminderter Verschleiß des Getriebes im Betrieb erzielt werden.

## Beschreibung

Die Erfindung betrifft ein Armgelenk für einen Manipulator sowie einen Manipulator mit Armgelenken. Das Armgelenk für den Manipulator weist ein um eine Getriebedrehachse drehbares Getrieberad auf. Das Getrieberad ist in einem Gehäuse des Armgelenks drehbar gelagert angeordnet und weist an zumindest einer seiner Stirnseiten einen Adapter auf. Der Adapter weist an seiner von der Stirnseite des Getrieberades abgewandten Seite eine bezüglich der Getriebedrehachse zentrale Öffnung auf.

Ein gattungsgemäßes Armgelenk wird in DE 20 2014 101 342 U1 offenbart, wobei das Getrieberad als Schneckenrad ausgebildet ist, das abtriebseitig über Adapter mit zentraler Öffnung an dem Gehäuse gelagert ist. Der Aufbau ist komplex. Ferner bietet der Aufbau keine wesentlichen Variationsmöglichkeiten hinsichtlich Aufbau und Verwendung des Armgelenks und damit des Manipulators mit derartigen Armgelenken.

Bei einem anderen Armgelenk gemäß der DE 20 2016 101 255 U1, ebenfalls mit Schneckengetriebe ausgestattet, ist aufwendig abtriebseitig zum Schneckenrad eine Drehscheibe zum Anschluss an ein Distanzteil und zwar quer zu dessen Längsschnitt vorgesehen. Auch hier lassen sich aus dem konstruktiven Aufbau keine unaufwändige Variationsmöglichkeiten ableiten.

Eine Aufgabe der Erfindung ist, das gattungsgemäße Armgelenk bzw. den Manipulator mit dem gattungsgemäße Armgelenk so weiterzuentwickeln, dass er einen einfacheren Aufbau aufweist, leichter montierbar ist sowie mehr Variationsmöglichkeiten hinsichtlich Aufbau und möglicher Verwendung bietet.

Die gestellte Aufgabe wird erfindungsgemäß durch die Merkmale des Anspruches 1 gelöst. Vorteilhafte Weiterbildungen werden in den Unteransprüchen beschrieben. Die gestellte Aufgabe wird bereits dadurch gelöst, dass die zentrale Öffnung ein Innengewinde aufweist.

Wie weiter unten näher beschrieben, bietet das Innengewinde die Möglichkeit für eine rasch herstellbare, sichere und unaufwändige Verbindung des Armgelenks mit beispielsweise dem Getrieberad und/oder einem Gehäuse eines benachbarten Armgelenks des Manipulators. In Erweiterung der Variationsmöglichkeiten kann ferner unaufwändig eine Verbindung mit einer Motorachse eines Motors hergestellt werden, um hierüber das Getrieberad direkt anzutreiben. Damit können bestimmte Verbindungsarten zwischen zwei benachbarten sowie ferner sogar zu einem übernächsten Armgelenk und darüber hinaus benachbarten Armgelenken hergestellt werden, die bestimmte Relativbewegungen zwischen den verbundenen Armgelenken, Drehmomentübertragungsformen von Armgelenk zu Armgelenk und/oder Durchleitungen von Drehmomenten erlauben.

Über den Gewindeeingriff eines Bauteils mit Außengewinde in das Innengewinde des Adapters kann eine Wirkverbindung zwischen dem Bauteil und dem Getrieberad herstellt werden. Dieses Bauteil kann beispielsweise Teil eines weiteren Armgelenks oder ein auf die Gelenkachse wirkender Motor sein.

In einer vorteilhaften Weiterbildung des Armgelenks kann das Gehäuse ein Aufnahmeteil zur Aufnahme eines weiteren Getriebeelementes aufweisen. Dieses weitere Getriebeelement kann quer zur Getriebedrehachse angeordnet sein. Es kann mit der Peripherie des Getrieberades in Wirkverbindung stehen. Damit bilden Getrieberad und das weitere Getriebeelemente ein Getriebe zur Umwandlung eines Drehmoments. Die Peripherie des Getrieberades kann beispielsweise ein umfängliches Gewinde oder eine Verzahnung, wie Stirnverzahnung oder Kegelverzahnung, aufweisen. Die Auslegung der Peripherie hängt von der jeweiligen Art des durch das Getrieberad und das weitere Getriebeelement aufgebauten Getriebes ab. Dies wird im Einzelnen beispielgebend weiter unten beschrieben.

Die Lagerung des Getrieberades kann mittels beliebiger geeigneter Lager, wie mittels Gleitlager, Kugellager, insbesondere Doppelkugellager, oder Rollenlager erfolgen. Vorteilhaft können zur Lagerung Kunststofflager, insbesondere Kunststoffgleitlager, eingesetzt werden. Die Kunststofflager können bekanntlich schmiermittelfrei und somit wartungsfrei ausgelegt sein. Das Getrieberad kann axial verschiebungsfest gehalten gelagert sein. Die Lagerung kann über Radiaxlager erfolgen, die eine Bewegungsfreiheit des Getrieberades lediglich in Umfangsrichtung zulassen.

Der Adapter kann drehbar um die Getriebedrehachse an dem Gehäuse gelagert sein. Die Lagerung des Getriebebauteiles kann allein über Adapter erfolgen. Der Adapter kann ein einzelnes Bauteil, vorzugsweise ein einstückiges Bauteil sein. Der Adapter kann mechanisch oder einstückig, insbesondere stoffschlüssig mit dem Getrieberad verbunden sein. Der Adapter mit dem Innengewinde kann zumindest drehfest mit dem Getrieberad, insbesondere fest oder einstückig mit dem Getrieberad verbunden angeordnet sein. Die zentrale Öffnung kann einen kreisrunden Querschnitt aufweisen und in Richtung der Drehachse in das Getrieberad eingebracht sein. Insbesondere ist die zentrale Öffnung von außen zugänglich.

Bekanntlich wird nach allgemeiner Definition über eine Drehachse kein Drehmoment, hingegen über eine Drehwelle ein Drehmoment jeweils auf das darauf gelagerte Getriebebauteil wie das Getrieberad übertragen. In Anlehnung an den üblichen Sprachgebrauch wird aber im Folgenden von einer Drehachse gesprochen, auch wenn ein Drehmoment übertragen werden kann. Die tatsächliche Funktion der Drehachse als Welle oder Achse ergibt sich dann aus dem Zusammenhang.

Es versteht sich, dass der Begriff Gehäuse auch Gestell oder Basis umfasst, auf der das Armgelenk aufgebaut ist.

Das Getrieberad kann an seinen beiden Stirnseiten einen Adapter aufweisen und über die beiden Adapter im Gehäuse drehbar gelagert sein. Insbesondere kann die Lagerung des Getrieberades zur Getriebedrehachse symmetrisch erfolgen. Das Getrieberad kann bezüglich der Getriebedrehachse an beiden Stirnseiten jeweils über einen Adapter an dem Gehäuse drehbar gelagert sein. Die Lager zu beiden Seiten des Getrieberades können gleich ausgebildet sein.

Insbesondere können beide Adapter an ihren von den Stirnseiten des Getrieberads abgewandten Seiten jeweils eine bezüglich der Getriebedrehachse zentrale Öffnung mit einem Innengewinde aufweisen. Damit kann zum Aufbau des Manipulators mit zwei oder mehr Armgelenken axial an beiden Stirnseiten des Getrieberades eine Wirkverbindung zu einem benachbarten Armgelenk hergestellt werden. Diese Verbindung kann auch zu einer Drehmomentachse, wie Motordrehachse und/oder einem anderen Bauteil, wie Verlängerung, Kopplung oder Werkzeug, erfolgen. Diese Anschlussmöglichkeiten können auch kombiniert erfolgen, indem auf der einen Seite eine Möglichkeit zur Wirkverbindung auf der anderen Seite eine andere Möglichkeit zur Wirkverbindung gewählt wird.

Es wird als Vorteil angesehen, dass das Getrieberad und/oder das weitere Getriebeelement jeweils spielfrei zum Gehäuse sowie/oder dass das Getrieberad und das weitere Getriebeelement spielfrei ineinander wirkend angeordnet sind. Dank der Spielfreiheit kann eine hohe Laufruhe und ein verminderter Verschleiß des Getriebes im Betrieb erzielt werden. Die Spielfreiheit kann so ausgeführt werden, dass sie, beispielsweise zum Ausgleich eines durch Verschleiß entstandenen Spiels zwischen den jeweilig ineinander wirkenden Bauteilen nachstellbar bzw. nachjustiertbar ist. Vorteilhaft kann eine Einstellvorrichtung zur spielfreien Anordnung des Getrieberads und/oder des weiteren Getriebeelements zum Gehäuse ausgelegt sein. Ferner oder zusätzlich kann die Einstellvorrichtung zur spielfreien Anordnung des Getrieberads und des weiteren Getriebeelements relativ zueinander dienen.

In einer Weiterbildung des Armgelenks kann das weitere Getriebeelement eine in einer Abstandsrichtung zur Getriebedrehachse beabstandete Wirkachse aufweisen. Über diese Wirkachse kann das weitere Getriebeelement in dem Aufnahmeteil des Gehäuses gelagert angeordnet sein. Insbesondere kann die Wirkachse quer zur Getriebedrehachse angeordnet sein. Konstruktiv einfach kann die Wirkachse senkrecht zu der Getriebedrehachse angeordnet sein. Getriebedrehachse und Wirkachse können sich nicht schneidend angeordnet sein. Insbesondere können die Getriebedrehachse und die Wirkachse parallel zu einer Ebene angeordnet sein.

Die Ebene kann sich senkrecht zu einem in Abstandsrichtung verlaufenden Abstand zwischen Wirkachse und Getriebedrehachse erstrecken. Die Abstandsrichtung kann radial zur Getriebedrehachse und zwar von dem Getrieberad zu dem weiteren Getriebeelement hin verlaufen.

Das Getrieberad und das weitere Getriebebauteil können zur Einstellung einer bezüglich der Abstandsrichtung axialen Spielfreiheit in Abstandsrichtung relativ zueinander bewegbar und festlegt angeordnet sein. Die Relativbewegung zur Spieleinstellung in Abstandsrichtung kann durch Verschiebung des Getrieberades und/oder des weiteren Getriebeelementes relativ zu dem Gehäuse erfolgen.

Diese relative Beweglichkeit ist lediglich zur Einstellung vorgesehen, wobei sie spielfrei zueinander angeordnet natürlich keine relative Beweglichkeit in Richtung des Spiels aufweisen. Vorzugsweise ist der Abstand der minimale Abstand zwischen Wirkachse und Getriebedrehachse. Vorteilhaft kann die Einstellung oder auch Justierung über ein Ableiten an in Abstandsrichtung wirksamen schiefen Ebenen erfolgen. Vorzugsweise ist allein das Getrieberad zur Einstellung in Einstellungsrichtung relativ zu dem Gehäuse bewegbar angeordnet. Das weitere Getriebeelement kann bezüglich einer Linearbewegung in Einstellungsrichtung relativ zu dem Gehäuse statisch angeordnet sein.

Die Lager für das Getrieberad können jeweils einen dem Gehäuse zugeordneten ersten Lagerring und einen dem Getrieberad zugeordneten zweiten Lagerring aufweisen. Zur Einstellung der bezüglich der Abstandsrichtung axialen Spielfreiheit kann eine Einstellkraft über die schiefe Ebene in Richtung von dem Getrieberad zu dem weiteren Getriebeelement hin in den ersten Lagerring eingekoppelt werden. Die schiefe Ebene kann entsprechend eine Flächennormale aufweisen, die mit einer Richtungskomponente in Abstandsrichtung zu dem weiteren Getriebeelement hin weist. Die schiefe Ebene kann in einem vorzugsweise konstanten Neigungswinkel zu der Abstandsrichtung geneigt angeordnet sein. Der Neigungswinkel kann kleiner/gleich 45°, kleiner/gleich 30° oder kleiner/gleich 10° sein. Vorzugweise ist der Neigungswinkel so bemessen, dass eine Selbsthemmung der Gleitbewegung auftritt. Bekanntlich ist Voraussetzung für eine Selbsthemmung, dass der beim Abgleiten durch Reibung verursachten Widerstand gegen ein Verrutschen oder ein Verdrehen zweier aneinander liegender oder berührender Körper kleiner oder gleich einer Haftreibung ist, die dieser relativen Gleitbewegung dieser Körper entgegensteht.

Es kann als Teil der Einstellvorrichtung mindestens ein an dem Gehäuse bewegbar gelagertes Einstellelement vorgesehen sein. Insbesondere kann das Einstellelement quer zur Abstandsrichtung an dem Gehäuse bewegbar und insbesondere feststellbar gelagert angeordnet sein. Das Einzelelement kann unter Erzeugung der Einstellkraft an der schiefen Ebene abgleiten. Hierzu können das Einstellelement und/oder der erste Lagerring jeweils eine schiefe Ebene aufweisen, über die die Abgleitung erfolgt.

In einer konstruktiv vorteilhaft einfachen Ausführungsform kann das Einstellelement als Schraubbolzen mit kegelförmigem Arbeitsende ausgebildet sein, mit dem der Schraubbolzen quer zur Einstellrichtung in eine am ersten Lagerring vorgesehene angepasste Einstellausnehmung abgleitet. Kraftmechanisch günstig können Schraubbolzen und Einstellausnehmung in Höhe eines bezüglich einer Richtung von dem weiteren Getriebeelement zu dem Getrieberad hin oberen Bereich des ersten Lagerring positioniert sind. Vorzugsweise handelt es sich hier um den obersten Bereich des ersten Lagerrings. Der Schraubbolzen selbst kann in einem vorzugsweise selbsthemmenden Gewindeeingriff mit dem Gehäuse schraubbeweglich an demselben angeordnet sein. Zur Vermeidung von Kippmomenten kann an beiden Seiten des Getrieberades jeweils ein Einstellelement vorgesehen sein, so dass die Einstellung der Spielfreiheit an beiden Seiten des Getrieberades vorgenommen werden kann.

In einer weiteren Spezifizierung des Armgelenks kann das weitere Getriebeelement in Richtung der Wirkachse linear beweglich und/oder um die Wirkachse drehbar jeweils an dem Aufnahmeteil des Gehäuses gelagert angeordnet sein. Das weitere Getriebeelement kann zur relativen Linearbewegung als Linearelement, wie Zahnstange, ausgebildet sein. Damit kann es zusammen mit dem Getrieberad ein Lineargetriebe ausbilden. Im Falle einer um die Wirkachse drehbaren Ausführungsform kann das weitere Getriebeelement beispielsweise als Schnecke für ein Schneckengetriebe oder als Stirnrad für ein invertiertes Schneckengetriebe ausgebildet sein.

Zur Einstellung einer bezüglich der Wirkachse axialen Spielfreiheit kann das weitere Getriebeelement relativ zum Gehäuse in Richtung der Wirkachse lageveränderlich angeordnet sein. Die vorgesehene Lageveränderung kann, muss aber nicht notwendig, sich in einem geringfügigen Rahmen bewegen, beispielsweise um lediglich beim Einbau durch Aufsummierung von Toleranzen und/oder beim Betrieb durch Verschleiß sich einstellende Abweichungen von einer vorgeschriebenen spielfreien Lagerung auszugleichen.

Bei der Ausführungsform des Getriebes als Schneckengetriebe mit Schneckenrad und Schnecke können das weitere Getriebeelement als Schnecke und die Wirkachse als Antriebswelle ausgebildet sein. Die Schnecke kann auf der Wirkachse verdrehfest angeordnet sein. Ferner kann die Wirkachse axial vorzugsweise beidstirnseitig der Schnecke an oder in dem Aufnahmeteil drehbeweglich gelagert sein. Die Lager können die Schnecke jeweils stirnseitig axial abstützen. Wie üblich, kann das Schneckenrad eine dem Gewinde der Schnecke angepassten Verzahnung, insbesondere Schrägverzahnung, aufweisen.

Die Antriebswelle kann in einem Hohlprofil geführt angeordnet sein. Damit ist auch ein Schutz der Antriebswelle gegeben. Das Hohlprofil kann hierzu einen vorzugsweise mittigen in Längsrichtung des Hohlprofils vorzugsweise mittig verlaufenden Kanal für die Antriebswelle aufweisen. Hierbei kann das Hohlprofil allein zum Schutz und insbesondere zur Durchführung der Antriebswelle dienen, idealerweise ohne ein Drehmoment in das Armgelenk einzukoppeln. Die Antriebswelle kann mit radialem Schlupf in dem Kanal angeordnet sein. Das Hohlprofil kann im Falle des Schneckenantriebs verdrehfest und verschiebungsfest zum Aufnahmeteil an und/oder in demselben angeordnet sein. Die Antriebswelle kann an dem Hohlprofil gelagert sein.

Das Hohlprofil kann zwei zumindest über die axiale Erstreckung der Schnecke voneinander beabstandet angeordnete Abschnitte, d.h. einen ersten Abschnitt und einen zweiten Abschnitt, aufweisen. Zumindest der erste Abschnitt kann zur Einstellung einer axialen Spielfreiheit der Schnecke auf der Antriebswelle über ein vorgesehenes Justiergerät der Einstellvorrichtung zu der Schnecke hin axial bewegbar angeordnet sein. Die axiale Beweglichkeit kann sich, ähnlich wie oben im Zusammenhang mit der Spieleinstellung der Wirkverbindung von Getrieberad und weiterem Getriebeelement bereits dargestellt, in der Größenordnung eines auszugleichenden Spiels bewegen. Dieses Spiel kann durch Verstellung des Justiergerätes eliminiert werden.

Die beiden Abschnitte können jeweils an den von der Schnecke weg weisenden Endbereichen an dem Aufnahmeteil gegengelagert angeordnet sein. Insbesondere kann der erste Abschnitt des Hohlprofils an einem Ende an dem Justiergerät gelagert und an seinem anderen Ende zur Schnecke hin widergelagert angeordnet sein. Das Justiergerät kann seinerseits an dem Aufnahmeteil gelagert angeordnet sein. Entsprechend kann der zweite Abschnitt des Hohlprofils mit seinem einen Ende zur Schnecke hin gelagert und seinem anderen Ende an dem Aufnahmeteil widergelagert angeordnet sein. Es können der erste Abschnitt des Hohlprofils über das Justiergerät und der zweite Abschnitt des Hohlprofils über ein vorgesehenes Klemmelement an dem Aufnahmeteil widergelagert sein, wobei das Klemmelement an dem Gehäuse bezüglich der Wirkachse gegen einen Anschlag axial verschraubt ist. Wie üblich kann das Klemmelement zwei koaxiale Hülsen, also eine radial innere Hülse und eine radial äußere Hülse, aufweisen, die über konische Schraubgewinde so in Gewindeeingriff stehen. Mit fortschreitender Verschraubung übt die äußere Hülse über die innere Hülse einen wachsenden Anpressdruck auf das Hohlprofil aus, welches bis zum Reibschluss mit dem Hohlprofil führen kann. In diesem Fall wird das Hohlprofil über das mit dem Gehäuse verschraubte Klemmelement an dem Gehäuse festgelegt. Wird kein Anpressdruck erzeugt, so dient das mit dem Gehäuse verschraubte Klemmelement als Gleitlager.

Die Schnecke kann axial verschiebungsfest, insbesondere in einem Presssitz, auf der Antriebwelle angeordnet sein. Die Beabstandung der Abschnitte kann bei Spielfreiheit genau gleich der axialen Erstreckung von Schnecke und Antriebswellenlagerung sein.

Das Justiergerät kann bezüglich des weiteren Getriebeelements in Richtung der Wirkachse einstellwirksam ausgebildet sein. Das Justiergerät kann ausgelegt sein, zur Einstellung der Spielfreiheit den ersten Abschnitt des Hohlprofils und hierüber die Lagerung axial in Richtung von dem ersten Abschnitt des Hohlprofils zu dem zweiten Abschnitt desselben hin gegen die Schnecke zu drücken. Insbesondere kann sich der erste Abschnitt des Hohlprofils mit einem Ende stirnseitig an dem Justiergerät und mit dem anderen Ende stirnseitig an einem bezüglich einer Richtung von dem Justiergerät zu der Schnecke hin vorderen Lager der Lagerung abstützen. Der zweite Abschnitt des Hohlprofils kann sich entsprechend mit einem Ende stirnseitig an dem bezüglich der Richtung von dem Justiergerät zu der Schnecke hin hinteren Lager abstützen. Hierzu kann das andere Ende über ein vorgesehenes Klemmelement an dem Aufnahmeteil widergelagert sein.

Die axiale Beabstandung der beiden Abschnitte des Hohlprofils kann somit neben der axialen Erstreckung der Schnecke auch die axiale Erstreckung des vorderen und des hinteren Lagers der Antriebswelle an dem Hohlprofil einschließen. Vorzugsweise sind die Gewinde des Klemmelements und/oder des Justiergeräts selbsthemmend ausgebildet.

In einer Spezifizierung des Armgelenks kann das Justiergerät eine zur Wirkachse axiale Sacköffnung aufweisen. Die Antriebswelle kann mit einem freien Ende in die axiale Sacköffnung frei bleibend hineinragend angeordnet sein. Das Justiergerät kann einerseits an dem Aufnahmeteil festgelegt sein und andererseits beispielsweise ein auf dem Hohlprofil verschieblich gelagertes Bauteil, wie Hülse, aufweisen, das bezüglich der Wirkachse stirnseitig an dem vorderen Lager anliegt. Die Hülse kann mittels einer vorgesehen Stellvorrichtung des Justiergerätes unter axialer Verschiebung des vorderen Lagers weiter gegen die Schnecke gepresst werden, bis Spielfreiheit erzielt ist. Mit der positioniert sein. Insbesondere kann das Justiergerät überwurfmutterartig ausgebildet sein. Vorteilhaft kann die Stellvorrichtung von außen betätigbar sein. Sie kann eine Übersetzung mit Gewindeeingriff aufweisen. Der Gewindeeingriff kann selbsthemmend ausgebildet sein.

Mit Verdrehung des Schraubelements kann das vordere Lager zur Einstellung eines bestimmten Spiels bis hin zur Spielfreiheit axial verschoben werden. Ist beispielsweise bei Auftreten eines Spiels durch Verschleiß eine Nacheinstellung notwendig, so kann das aufgetretene Spiel auf einfache Weise durch Betätigung der Stellvorrichtung eliminiert werden.

In einer anderen Weiterbildung des Armgelenks kann das Getriebe als invertiertes Schneckengetriebe ausgebildet sein. Bei einem invertierten Schneckengetriebe kann, umgekehrt zu dem üblichen Schneckengetriebe, das weitere Getriebeelement durch das Getrieberad angetrieben werden. Insbesondere kann vorgesehen sein, dass die Wirkachse als antreibbares Hohlprofil mit dem Innenkanal zur Aufnahme der Antriebswelle, wie Motorwelle, ausgebildet ist. Das Schneckenrad kann verdrehfest auf dem Hohlprofil angeordnet sein. Das Hohlprofil seinerseits kann drehbeweglich an oder in dem Aufnahmeteil gelagert sein. Hieraus ergibt sich die Möglichkeit, dass zusätzlich zu dem Hohlprofil als Antriebswelle eine weitere in dem Kanal durchgeführte Antriebswelle vorgesehen sein kann, die, idealerweise ohne ein Drehmoment an das Hohlprofil zu übertragen, durch das Hohlprofil an dem Armgelenk vorbei geführt wird, um beispielsweise ein Drehmoment in ein benachbartes Armgelenk einzukoppeln.

Das Getrieberad kann ein umfängliches Außengewinde und das weitere Getriebebauteil eine dem Außengewinde angepasste Stirnverzahnung aufweisen. Das Getrieberad steht mit seinem Außengewinde in Gewindeeingriffe mit der Stirnverzahnung des weiteren Getriebebauteils. Vorzugsweise ist bei dem Schneckengetriebe die Ganghöhe des Außengewindes des als Schneckenrad ausgebildeten weiteren Getriebeelementes größer und insbesondere etwa 1,5-fach bis 4-fach größer als die Ganghöhe des Außengewindes des als "Schnecke" ausgebildeten Getrieberades beim invertierten Schneckengetriebe. Konstruktionsbedingt kann infolge der geringen Ganghöhe beim invertierten Schneckengetriebe ein sich möglicherweise einstellendes Spiel auch geringer als das beim Schneckengetriebe sein.

In einer weiteren vorteilhaften Ausführungsform des Armgelenks kann vorgesehen sein, dass, als Teil eines Lineargetriebes, das Getrieberad als Zahnrad und das weitere Getriebeelement als Linearelement, insbesondere als Zahnstangenelement ausgebildet sind. Das Zahnstangenelement kann zugleich die Wirkachse bilden und linear verschieblich an dem Aufnahmeteil angeordnet sein. In einer vorteilhaften Weiterbildung kann das Linearelement, insbesondere das Zahnstangenelement, in einer in Einbaulage zu dem Getrieberad hin offenen Aufnahmenut des Hohlprofils angeordnet sein. Hierbei kann die Aufnahmenut dem Linearelement so angepasst sein, dass das Linearelement in Richtung der Wirkachse und umfänglich zu derselben verschiebungsfest angeordnet ist. Vorzugsweise ist das Linearelement lageunveränderlich in der Aufnahmenut angeordnet.

Auch hinsichtlich der Mehrung von Variationsmöglichkeiten vorteilhaft, kann das Hohlprofil als Multifunktionsprofil ausgebildet sein.

Hierzu kann, wie oben beschrieben, das Hohlprofil, bei einem als Lineargetriebe ausgebildeten Getriebe, eine in Einbaulage zu dem Getrieberad hin offenen Aufnahmenut für das Linearelement, insbesondere den Zahnstangenabschnitt, aufweisen. Bereits beschrieben als vorteilhaftes Merkmal des Hohlprofils ist die mögliche kanalartige in Längsrichtung des Hohlprofils verlaufende Durchgangsöffnung oder auch der Innenkanal für die Antriebswelle bzw. für die Motorantriebswelle.

Ferner kann das Hohlprofil eine weitere Aufnahmenut zur Aufnahme von Sensorelementen, wie Wegaufnehmer oder Magnetband, und/oder Steuer- und/oder Versorgungsleitungen für die Sensorelemente aufweisen. Vorzugsweise ist diese weitere Aufnahmenut an einer zur Wirkachse diametral gegenüberliegenden Außenseite des Hohlprofils angeordnet. Ferner kann das Hohlprofil eine Anschlagsvorrichtung zur Begrenzung eines Linearweges aufweisen, indem es, beispielsweise für ein Lineargetriebe oder ein Schneckengetriebe seitlich insbesondere hinterschnittene Aufnahmenuten für Befestigungselemente zur drehfesten Anbindung des Hohlprofils an das Aufnahmeteil des Gehäuses aufweist. Hierzu können beispielsweise dem Querschnitt der zugeordneten Aufnahmenut angepasste Ankerelemente vorgesehen sein, die zumindest in einer der seitlichen Aufnahmenuten verschieblich und insbesondere in derselben festlegbar angeordnet sind. Über derartige Ankerelemente kann das Hohlprofil auch verdrehfest und verschiebungsfest zu dem Gehäuse gehalten werden.

In einer weiteren besonders vorteilhaften und die eingangsgestellte Aufgabe lösenden Vereinfachung des Aufbaus und zur Mehrung der Variationsmöglichkeiten kann vorgesehen sein, dass das Armgelenk insgesamt und/oder die Getriebebauteile jeweils modular aufgebaut sind. Es können das Getriebebauteil und das weitere Getriebeelement einzelne Modulbauteile sein. Diese können zur Erstellung einer bestimmten Getriebeart, wie Schneckengetriebe, invertiertes Schneckengetriebe oder Stirnradgetriebe, zu dem Getriebe zusammensetzbar sein, ohne dass hierzu die Lagerung des Getrieberades geändert werden muss. Ähnliches gilt für die zugehörigen Adapter als Modulbauteile, wobei diese darüber hinaus auch vorteilhaft so ausgebildet sein können, dass sie universell für beschriebene Getriebearten eingesetzt werden können.

Damit sind die Modulbauteile leicht austauschbar und miteinander variierbar. Wie unmittelbar einsichtig, ist eine derartige Modulbauweise kostenunaufwändig. Es kann beispielsweise ein Baukastensystem mit Modulbauteilen unterschiedlicher Getriebearten und unterschiedlichen Getriebegrößen, Gehäuse und/oder Gehäuseteilen wie Deckel oder stirnseitigen Abschlusselementen, Adaptern und/oder Hohlprofilen vorgesehen sein.

Das Armgelenk kann motorisch antreibbar ausgebildet sein. Das Armgelenk kann Teil eines Motorantriebs mit elektrischem Motor und Getriebe zur Umwandlung des Motordrehmoments sein. Hierzu kann ein zugehöriger Motor beabstandet zu dem Armgelenk angeordnet sein. Der Motor kann von dem Getriebe weggebaut angeordnet sein. Dies hat den Vorteil, dass das Armgelenk an sich konstruktiv kleiner und damit beweglicher gehalten werden kann, ferner dass eine durch den Motor erzeugte Abwärme, wenn überhaupt, nur geringfügig auf das Armgelenk einwirken kann. Vorteilhaft kann das Getriebe direkt durch den Motor angetrieben werden. Wie insbesondere der Figurenbeschreibung entnehmbar, kann das Motordrehmoment beispielsweise über die Antriebsachse an das Getrieberad oder an das weitere Getriebeelement übertragen werden.

Ein weiterer Vorteil ist, dass eine Reihe von verschiedenen Motoren für den Einsatz geeignet ist, wobei sie anhand bestimmter Bedingung, wie maximales Drehmoment sowie Art und Höhe der Betriebsspannung, ausgewählt werden können. Vorteilhaft kann der Motor als bürstenloser Gleichstrommotor ausgebildet sein.

Besonders vorteilhaft kann ein Manipulator mit zumindest einem Armgelenk gemäß einer der vorher und nachfolgend genannten Ausführungsform vorgesehen sein. Insbesondere kann der Manipulator zumindest zwei Armgelenke aufweisen, die in einer Wirkverbindung zueinander angeordnet sind. Der konstruktive Aufbau der zumindest zwei Armgelenke kann zumindest bis auf das Getrieberad und das weitere Getriebeelement gleich sein.

Die zumindest zwei Armgelenke können mechanisch miteinander verbunden sein. Die beiden Armgelenke können mittels einer Verbindungsvorrichtung in einer Verbindungsposition kraft-, bewegungs- und/oder führungswirksam miteinander verbunden sein. Die zumindest zwei Armgelenke können bezüglich der Getriebedrehachse einander zugewandt koaxial fluchtend angeordnet sein. Insbesondere können die zumindest zwei Armgelenke um eine gemeinsame Getriebedrehachse drehbar gelagert sein. Die zumindest zwei Armgelenke können bezüglich der Getriebedrehachse stirnseitig zueinander gewandt angeordnet sein. Hierzu können die einander zugewandten Stirnseiten der Armgelenke jeweils die zentrale Öffnung aufweisen. Die zentralen Öffnungen können zueinander fluchtend angeordnet sein. Insbesondere können die zentralen Öffnungen der zumindest zwei Armgelenke gleich ausgebildet sein.

Die Verbindungsvorrichtung kann Parallelverbinder aufweisen, mittels der die zumindest beiden Armgelenke in der Verbindungsposition bezüglich einer Ebene senkrecht zu der Getriebedrehachse parallel zueinander und ferner relativ zueinander axial verschiebungsfest gehalten angeordnet sein. Die Parallelverbinder können in der Verbindungsposition zur beabstandeten parallelen Positionierung der zumindest beiden Armgelenke und/oder zur Verbindung der zumindest beiden Armgelenke dienen. Durch die Parallelverbinder können die zumindest beiden Armgelenke oder ferner weitere unmittelbar oder mittelbar benachbarte Armgelenke parallel beabstandet zueinander gehalten und verbunden angeordnet sein. Insbesondere können die Parallelverbinder zumindest im Wesentlichen rotationssymmetrisch zur Getriebedrehachse aufgebaut sein.

Vorteilhaft kann die Verbindungsvorrichtung so ausgelegt sein, dass die Parallelverbinder in der Verbindungposition funktionswirksam an bestimmten Bauteilen der Armgelenke angreifen. In einer weiteren Spezifizierung des Manipulators kann jeweils bezüglich der Getriebedrehachse vorgesehen sein, dass zumindest ein radial innenliegender als Innenverbinder ausgebildeter Parallelverbinder Drehmoment übertragungswirksam in die einander zugewandten zentralen Öffnungen stirnseitig benachbarter Armgelenke eingreift. Ferner kann ein radial außenliegender als Außenverbinder ausgebildeter Parallelverbinder vorgesehen sein, der zum Angriff an den Gehäusen stirnseitig benachbarter Armgelenke ausgelegt ist. Überdies kann ein sich quer zur Getriebedrehachse erstreckender als Querverbinder ausgebildeter Parallelverbinder bereitgestellt werden, der ausgelegt ist, Drehmoment übertragungswirksam radial innen in die zentrale Öffnung eines Armgelenks und radial beanstandet zu der zentralen Öffnung an den Gehäusen des zu dem Armgelenk stirnseitig benachbarten Armgelenks anzugreifen.

Es kann vorgesehen sein, dass über die Verbindung der beiden Armgelenke eine Übertragung des Drehmomentes von der Getriebedrehachse des einen Armgelenks auf die Getriebedrehachse des anderen Armgelenks erfolgt. Hierzu können die Gehäuse der beiden Armgelenke und die Getriebedrehachse der beiden Armgelenke jeweils fest miteinander verbunden sein. Vorteilhaft einfach können die Getriebedrehachsen der beiden Armgelenke über einen Innenverbinder und die Gehäuse der beiden Armgelenke über einen Außenverbinder drehfest miteinander verbunden sein.

Alternativ kann die Verbindung der beiden Armgelenke als Drehverbindung ausgeführt sein. In der Drehverbindung kann das auf die Getriebedrehachse wirkende Drehmoment eines der beiden Armgelenke auf das Gehäuse des anderen Armgelenks übertragen werden. Insbesondere kann vorgesehen sein, dass die beiden Armgelenke drehbeweglich über einen sich quer zur Getriebedrehachse erstreckenden Querverbinder miteinander verbunden sind. Der Querverbinder kann mit radial inneren Endabschnitt verdrehfest, insbesondere verdreh- und verschiebungsfest, mit der Getriebedrehachse eines der beiden Armgelenke verbunden sein. Ferner kann der Querverbinder mit einem radial äußeren Endabschnitt gleit- oder rolldrehbeweglich mit dem Gehäuse des einen Armgelenks und fest mit dem Gehäuse des anderen Armgelenks verbunden sein. Damit kann das Gehäuse des einen Armgelenks gleit- oder rollverschieblich an dem radial äußeren Endabschnitt des Querverbinders anliegen.

In einer weiteren Ausführungsform des Manipulators können die zumindest zwei Armgelenke unter Ausbildung einer Drehführung des einen Armgelenks an dem anderem Armgelenk miteinander verbunden sein. Insbesondere kann ein sich um die Getriebedrehachse gedrehtes Armgelenk an dem anderen Armgelenk geführt werden. Insbesondere kann dies, bis auf eventuelle durch die Führung verursachte Reibungsverluste, ohne wesentliche Drehmomentübertragung von dem einen Armgelenk auf das andere Armgelenk erfolgen. Zur Reibungsverminderung können übliche Maßnahmen, wie beispielsweise eine Teflonbeschichtung an den Reibungsflächen, vorgesehen sein. Dank der vorgesehenen Parallelverbinder vorteilhaft einfach, können die Getriebedrehachsen der beiden Armgelenke über einen radial innen liegenden als Innenverbinder ausgebildeten Parallelverbinder fest sowie indem ein radial außen liegender als Außenverbinder ausgebildeter Parallelverbinder gleit- oder rollbeweglich mit dem Gehäuse des anderen Armgelenks und verdrehfest mit dem Gehäuse des einen Armgelenks verbunden sein. Alternativ kann der Außenverbinder zur Ausbildung der Drehführung gleit- oder rollbeweglich mit dem Gehäuse des einen Armgelenks und verdrehfest mit dem Gehäuse des anderen Armgelenks verbunden sein.

Die verdrehfeste Verbindung der Getriebedrehachsen über den Innenverbinder dient bei der Drehführung zunächst dem axialen Zusammenhalt der beiden Armgelenke. Bei der Drehführung wird das eine Armgelenk über seine Drehung an dem anderen Armgelenk, d.h. an dem Gehäuse desselben geführt. Ferner wird, bis auf mögliche Reibungsverluste, kein Drehmoment auf das andere Drehgelenk übertragen. Das hat zur Folge, dass das Getriebe beispielsweise des anderen Armgelenks für die Einkopplung beispielsweise eines Motordrehmoments noch "frei" ist.

Die Parallelverbinder können, insofern sie ausgebildet sind, in der Verbindungsposition Drehmoment übertragungswirksam in eine der einander zugewandten zentralen Öffnungen oder in beide zugewandte zentrale Öffnungen einzugreifen, für den jeweiligen Eingriff einen Endabschnitt mit einem dem Innengewinde der jeweiligen zentralen Öffnung angepassten Außengewinde aufweisen. In der Verbindungsposition greifen die beiden Gewinde drehmomentübertragungswirksam ineinander. Hierzu kann ein entsprechender Einschraubensweg zur Herstellung der Schraubverbindung anschlagbegrenzt sein. Entsprechend kann der Innenverbinder zur Herstellung einer drehfesten Verbindung beider Armgelenke zwei freie Enden jeweils mit einem Abschnitt mit Außengewinde zum Eingriff in die in Einbaulage einander zugewandten zentralen Öffnungen zweier axial benachbarter Armgelenke aufweisen. Bei der drehfesten Verbindung kann eine unmittelbare Übertragung des Drehmomentes von einem Getrieberad des einen Gelenks auf das Getrieberad des anderen Gelenks erfolgen.

Als besonderer Vorteil wird angesehen, eine relative Verdrehung von Innengewinde zu Außengewinde in der Verbindungsposition zu blockieren. Insbesondere werden Innengewinde und Außengewinde aneinander festgesetzt. Dies ermöglicht eine bezüglich der Getriebedrehachse spielfreie Anordnung des Abschnitts mit dem Außengewinde, das in Gewindeeingriff mit dem Innengewinde der zentralen Öffnung steht. Insbesondere kann vorgesehen sein, dass zum spielfreien Gewindeeingriff von Innengewinde der zentralen Öffnung und Außengewinde des Endabschnitts zumindest ein Blockierelement, wie Bolzen, Stift oder Schraubelement, vorgesehen ist. Das Blockierelement kann in der Verbindungposition bezüglich der Getriebedrehachse axial in eine ihm angepasste Blockieröffnung zwischen die beide ineinander greifenden Gewinde eingebracht angeordnet sein. Die Blockieröffnung kann dadurch erstellt werden, dass in beide Gewinde jeweils eine gleiche halbkreisförmige Nut eingebracht ist, wobei sich die beiden Nuten in einer bestimmten relativen Drehposition der beiden Gewinde zu der kreisrunden Blockieröffnung zusammenfügen. Der Endabschnitt kann zum Erreichen seiner Verbindungsposition spielfrei gegen den Anschlag in die zentrale Öffnung eingeschraubt werden. Anschließend kann das Blockierelement zwischen die beiden Gewinde eingebracht werden. Das Blockierelement ermöglicht eine spielfreie verdrehfeste Verbindung durch Blockade des Gewindeeingriffs. Vorzugsweise werden mit dem Einschrauben des Blockierelements die beiden Bauteile mit den zentralen Öffnungen stirnseitig gegeneinander verschraubt.

Das Blockierelement kann, beide Gewinde schneidend, parallel zur Getriebedrehachse eingebracht werden. Es kann bezüglich der beiden Gewinde ein Überlappungsbereich vorgesehen sein, in dem sich Außengewinde und Innengewinde beim Gewindeeingriff bezüglich der Getriebedrehachse radial überlappen. Der Überlappungsbereich kann entsprechend der Zylindergeometrie der zentralen Öffnung eine hohlzylindrische Form aufweisen.

Es können, wenn beispielsweise die Spielfreiheit der Schraubverbindung durch Verschleiß aufgehoben ist, indem die beiden Bauteile nicht mehr spielfrei stirnseitig aneinander anliegen, das Blockierelement gelöst, die Bauteile spielfrei gegeneinander verschraubt und dann das Blockierelement wieder zwischen die Gewinde eingebracht werden.

Vorzugsweise sind mehrere, beispielsweise sechs oder acht Blockieröffnungen vorgesehen, die in der Verbindungsposition vorzugsweise umfänglich gleich beabstandet und ferner bezüglich der Getriebedrehachse auf einem gleichen Radius angeordnet sind. Durch die Anzahl der die Blockieröffnungen aufbauenden Nuten wird der Drehwinkel verringert, der notwendig ist, um zur Nachstellung eine Drehposition zu erreichen, in der sich die Nuten wieder zu den Blockieröffnungen zusammenfügen.

In einer vorteilhaften Ausbildungsform kann der Manipulator modular aufgebaut sein. Einzelne Module können beispielsweise die Armgelenke an sich, der Motor, Motorwelle zur Übertragung des Drehmoments auf das Getriebe, insbesondere auf das Getrieberad oder auf das weitere Getriebebauteil, jeweils die einzelnen Bauteile des Armgelenks wie Gehäuse, Getrieberad, weiteres Getriebebauteil, Adapter, ferner Verbindungsbauteile, wie die Parallelverbinder, und/oder das Hohlprofil sein.

Weitere Einzelheiten und Vorteile der Erfindung werden im Folgenden, ohne Einschränkung des Schutzumfangs, durch die Beschreibung bevorzugter Ausführungsformen unter Bezugnahme auf die beigefügten Zeichnungen ersichtlich. Hierbei zeigen:
- Fig. 1A-1C: jeweils eine Ansicht einer Ausführungsform eines Armgelenks,
- Fig. 2A-2B: jeweils eine Ansicht einer weiteren Ausführungsform des Armgelenks ähnlich der gemäß Figur 1, jedoch mit Einstellvorrichtung
- Fig. 2C: eine Ausschnittvergrößerung IIC gemäß Figur 2B
- Figuren 3-5: jeweils eine Ansicht einer weiteren Ausführungsform des Armgelenks mit Drehmoment übertragungswirksam angeschlossenem Motor,
- Fig. 6: eine Seitenansicht mit Einzeldarstellung der zusammenwirkenden Getriebeglieder gemäß Figuren 1-5,
- Fig. 7: eine bezüglich einer Getriebedrehachse Querschnittsansicht einer weiteren Ausführungsform des Armgelenks, hier mit invertiertem Schneckengetriebe,
- Figuren 8 und 9: jeweils eine Seitenansicht mit Einzeldarstellung des Zusammenwirken der Getriebeglieder gemäß Figur 7,
- Fig. 10: eine Seitenansicht einer weiteren Ausführungsform des Armgelenks, hier mit Lineargetriebe,
- Fig. 11: eine bezüglich der Getriebedrehachse Querschnittsansicht des Armgelenks gemäß Figur 10,
- Fig. 12A und 12B: jeweils eine Ansicht einer Hohlprofilachse; Figur 12A mit Magnetband
- Fig. 13: eine perspektivische Ansicht eines Zahnstangenprofils für das Armgelenk gemäß Figur 11,
- Fig. 14: eine perspektivische Ansicht einer an dem Gehäuse festlegbaren Sensorik,
- Fig. 15: eine Seitenansicht auf die Ausführungsform des Armgelenks gemäß Figur 1, hier mit stirnseitigem Führungseinsatz für eine Motorwelle,
- Fig. 16: eine bezüglich der Getriebedrehachse Längsschnittansicht C-C des Armgelenks gemäß Figur 15,
- Fig. 17: eine Ausschnittvergrößerung J gemäß Figur 16,
- Figuren 18A-18D: jeweils eine Ansicht eines der Bauteile des Führungseinsatzes gemäß Figur 15,
- Fig. 19: eine perspektivische Ansicht zweier fest miteinander verbundener Armgelenke IV und V einer Ausführungsform eines Manipulators,
- Figuren 20A und 20B: eine Seitenansicht bzw. eine Längsschnittansicht der Armgelenke gemäß Figur 19,
- Fig. 21A und 20B: jeweils eine Ansicht eines Außenverbinders zur drehfesten Verbindung der Gehäuse der beiden Armgelenke gemäß Figur 18,
- Fig. 22: eine perspektivische Ansicht eines Innenverbinder zur festen Verbindung der beiden Drehgelenkachsen der beiden Armgelenke gemäß Figur 18,
- Fig. 23: eine perspektivische Ansicht zweier drehbeweglich miteinander verbundener Armgelenke I und II einer weiteren Ausführungsform des Manipulators,
- Fig. 24A und 24B: jeweils eine Ansicht eines Querverbinders zur drehbeweglichen Verbindung der beiden Armgelenke gemäß Figur 23,
- Fig. 25A und 25B: eine perspektivische Ansicht bzw. Längsschnittansicht dreier miteinander verbundener Armgelenke I-III einer weiteren Ausführungsform des Manipulators, wobei die Armgelenke I und II drehbeweglich und Armgelenke II und III in drehführungswirksam miteinander verbunden sind,
- Figuren 26A und 26B: jeweils eine Ansicht einer weiteren Ausführungsform des Außenverbinder zur Ausführung einer Drehführung zwischen Armgelenken II und III,
- Fig. 27: eine perspektivische Ansicht zweier fest miteinander verbundener Armgelenke IV und V einer weiteren Ausführungsform des Manipulators,
- Fig. 28: eine Längsschnittansicht zur Figur 27 mit zusätzlichem sich parallel zum Armgelenk V drehendem Armgelenk V,
- Fig. 29A und 29B: eine perspektivische Ansicht bzw. Längsschnittansicht zweier drehbeweglich miteinander verbundenen Armgelenke I und II gemäß Figur 25, jedoch zusätzlich mit stirnseitig drehmomentwirksam gekoppeltem Motor,
- Fig. 30: eine Seitenansicht einer weiteren Ausführungsform des Manipulators mit drei Armgelenken gemäß den Figuren 25A und 25B und drei Armgelenken gemäß Figur 28,
- Fig. 31: eine Längsschnittansicht einer weiteren Ausführungsform des Manipulators mit drei Armgelenken gemäß Figur 28 und zwei Armgelenken gemäß Figur 23 und
- Fig. 32A und 32B: eine perspektivische Ansicht bzw. Längsschnittansicht einer weiteren Ausführungsform des Manipulators mit drei über einen Motor hintereinander angetriebener Armgelenke.

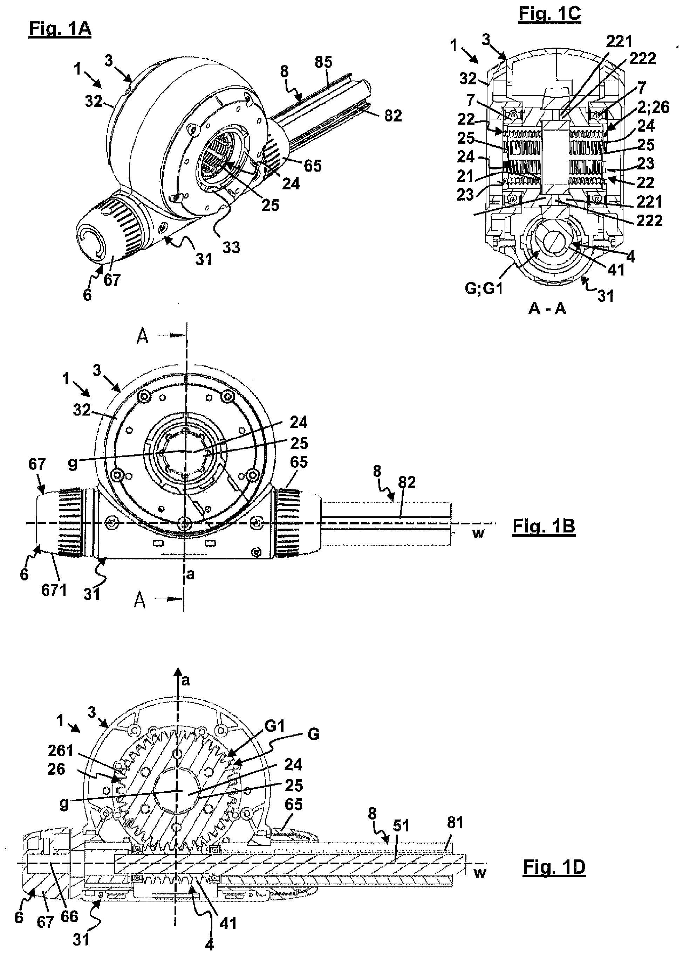

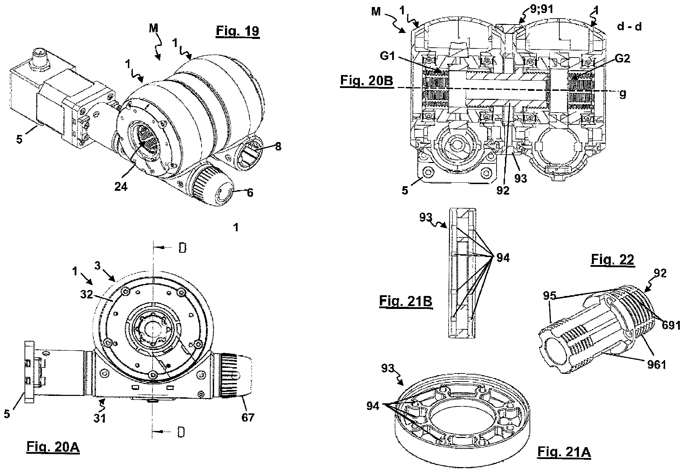

In der Beschreibung sind sämtliche Begrifflichkeiten zur Beschreibung der Örtlichkeit, wie oben, unten, vorn, hinten, rechts und links, so gemeint, wie sie in der jeweiligen Figur selbst gezeigt sind, es sei denn, es ist eigens anders definiert. In den Figuren 1-18 werden, ohne sich hierauf beschränken zu wollen, mögliche Ausführungsformen eines Armgelenks 1 für einen Manipulator M in unterschiedlichen Ansichten und Teilansichten gezeigt. In den Figuren 19-32 werden mögliche Ausführungsformen des Manipulators M mit miteinander kombinierten Armgelenken 1 wiedergegeben, die in Wirkverbindung zueinander stehen. Unmittelbar einsichtig ist, dass eine Vielzahl von weiteren Kombinationen und Kopplungen der Armgelenke 1 möglich ist, die ebenfalls in den Schutzbereich einbezogen sind.

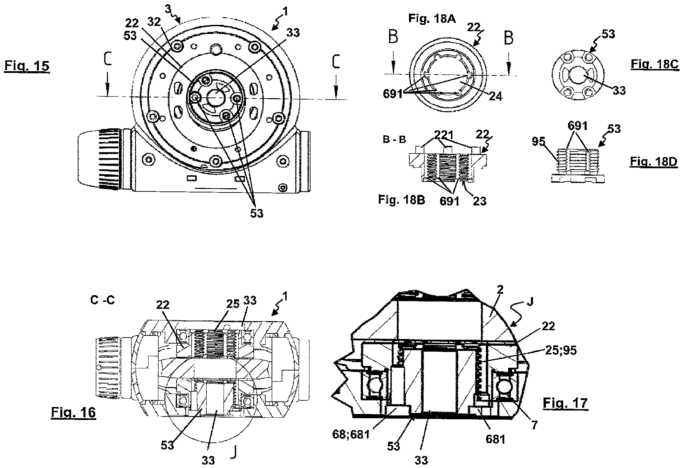

Wie insbesondere aus den Figuren 1, 2, 5, 8, 11, 16, 20B, 25B, 28, 29B und 32B ersichtlich, weisen die Armgelenke 1 jeweils ein um eine Getriebedrehachse g drehbares Getrieberad 2 auf. Das Getrieberad 2 ist in einem Gehäuse 3 des Armgelenks 1 drehbar gelagert. Es weist in den in den Figuren dargestellten Ausführungsformen des Armgelenks 1 an beiden seiner Stirnseiten 21 jeweils einen Adapter 22 auf. Das Getrieberad 2 ist über die beiden Adapter 22, d.h. bezüglich der Getriebedrehachse g beidseitig jeweils über ein Lager 7 im Gehäuse 3 drehbar angeordnet. In den Figuren 18A und 18B ist jeweils eine Einzeldarstellung des Adapters 22 gezeigt, der hier ein eigenständiges Bauteil ist. Alternativ kann zumindest einer der Adapter 22 einstückig mit dem Getrieberad 2 verbunden sein.

Die beiden Adapter 22 weisen jeweils an ihrer von der Stirnseite 21 des Getrieberades 2 abgewandten Seite 23 eine bezüglich der Getriebedrehachse g zentrale Öffnung 24 mit Innengewinde 25 auf. Minimal kann auch nur einer der beiden Adapter 22 mit der zentralen Öffnung 24 versehen sein. Wie den Figuren 18A und 18B entnehmbar, weisen die Adapter 22 jeweils axial vorstehende hier zylindrische Einsteckvorsprünge 221 auf, die auf einem Radius und umfänglich gleich beabstandet angeordnet, in Einbaulage jeweils axial in eine ihnen zugeordnete an dem Getrieberad 2 vorgesehene Stecköffnung 222 eingreifen. Da an beiden Seiten des Getrieberades ein Adapter mit den Steckvorsprüngen 221 vorgesehen ist, sind die Stecköffnungen 222 als Durchgangsöffnungen ausgebildet, in die in Einbaulage jeweils von zwei Seiten axial ein zugeordneter Steckvorsprung 221 eingreift. Die Adapter 22 sowie das Getrieberad 2 insgesamt sind jeweils rotationssymmetrisch zur Getriebedrehachse g ausgebildet.

Das Gehäuse 3 weist ein Aufnahmeteil 31 zur Aufnahme eines weiteren Getriebeelementes 4 auf. Das weitere Getriebeelement 4 ist quer zur Getriebedrehachse g auf einer Wirkachse w angeordnet. Die Wirkachse w ist beabstandet zu der Getriebedrehachse g positioniert. Das weitere Getriebeelement 4 ist über die Wirkachse w in dem Aufnahmeteil 31 gelagert angeordnet. In den hier gezeigten Ausführungsformen des Armgelenks 1 verlaufen beide, d.h. Wirkachse w und Getriebedrehachse g, parallel beabstandet zu einer Ebene, die sich senkrecht zu einem in Abstandsrichtung a verlaufenden Abstand zwischen Wirkachse w und Getriebedrehachse g erstreckt. Der Abstand ist hierbei der minimale Abstand zwischen den beiden Achsen. Getriebedrehachse g und Wirkachse w schneiden sich nicht.

Das Getriebeelement 4 steht mit der Peripherie des Getrieberades 2 in einer Wirkverbindung. Getrieberad 2 und weiteres Getriebeelement 4 bilden ein Getriebe G zur Übersetzung eines in das Armgelenk 1 eingekoppelten Motordrehmoments. Der Motor 5 an sich ist beabstandet zu dem jeweils zugeordneten Armgelenk 1 angeordnet.

Das Getrieberad 2 und das weitere Getriebeelement 4 sind bezüglich der Abstandsrichtung a axial spielfrei ineinander wirkend angeordnet. Hierzu sind das Getrieberad 2 und das weitere Getriebeelement 4 in Abstrahlrichtung a relativ zueinander bewegbar angeordnet. Zur Einstellung der Spielfreiheit ist in den hier gezeigten Ausführungsformen des Armgelenks 1 allein das Getrieberad 2 mittels einer Einstellvorrichtung 6 in Abstandsrichtung a relativ beweglich zu dem Gehäuse 3 angeordnet. Die Relativbewegung erfolgt hier durch eine Verschiebung des Getrieberads 2 in Abstandsrichtung a zu dem weiteren Getriebeelement 4 hin.

Die Einstellvorrichtung 6 setzt an den Lagern 7 des Getrieberades 2 bzw. dessen Adapter 22, über die das Getrieberad 2 gelagert ist, an. Das Getrieberad 2 ist über seine Adapter 22 axial zu beiden Seiten jeweils über ein Lager 7 an dem Gehäuse 3 drehbar gelagert. Die Lager 7 weisen jeweils einen dem Gehäuse 3 zugeordneten ersten Lagerring 71, der hier bezüglich der Getriebedrehachse g außen angeordnet ist, und einen dem Getrieberad 2 zugeordneten zweiten Lagerring 72 auf, der hier bezüglich der Getriebedrehachse g innen angeordnet ist. Zur Einstellung wird zumindest in eine der ersten Lagerringe 71 eine in Einsetzrichtung a zu dem weiteren Getriebeelement 4 hin wirkende Einstellkraft E eingekoppelt. Kraftmechanisch günstig ist hier vorgesehen, die Einstellkraft E über beide ersten Lagerringe 71 zur Verschiebung des Getrieberads 2 in dasselbe einzuleiten.

Hierzu wird über die Einstellvorrichtung 6 radial zur Abstandsrichtung a eine Einstellkraft K erzeugt, die, über ein Ableiten an vorgesehenen in Abstandsrichtung a wirksamen schiefen Ebenen S in Abstandsrichtung a in Richtung zu dem weiteren Getriebeelement 4 umgeleitet, in den jeweils zugeordneten ersten Lagerring 71 eingeleitet wird. Die schiefen Ebenen sind hier jeweils in einem gleichen Neigungswinkel zur Abstandsrichtung a angeordnet, der hier kleiner 60° ist. Hierzu ist für jeden ersten Lagerring 71 ein Einstellelement 61 vorgesehen, das bezüglich der Abstandsrichtung a in radialer Richtung zu dem ersten Lagerring 71 hin lageveränderlich in einer Einstellöffnung 62 an dem Gehäuse 3 angeordnet. Diese Einstellöffnung 62 ist oberhalb der Getriebedrehachse g und zwar in einem bezüglich eines um die Getriebedrehachse verlaufenden Radius obersten Punkt des Radius angeordnet. Damit wird kraftmechanisch günstig zugleich der jeweilige erste Lagerring 71 in seinem obersten Punkt mit der Einstellkraft E beaufschlagt. Das Einstellelement 61 weist einen Gewindeschaft 63 mit Außengewinde auf, mit dem es in Gewindeeingriff mit einem in der Einstellöffnung 62 vorgesehenen Innengewinde steht. Dieser Gewindeeingriff ist selbsthemmend. Das Einstellelement 61 ragt mit einem die schiefe Ebene S aufweisenden kegelförmigen Arbeitsende 64 in das Gehäuse 3 und liegt in einer Arbeitsposition an einer in einer Einstellausnehmung 621 an dem ersten Lagerring 71 vorgesehenen schiefen Ebene S an. Somit kann das Getrieberad 2 mit einer Schraubbewegung des Einstellelements 61 unter Einwirkung der schiefen Ebenen S in Abstandsrichtung a gegen das weitere Getriebeteil 4 gedrückt werden, bis es spielfrei an denselben anliegt. Für den Eingriff des Arbeitsendes 64 ist an dem ersten Lagerring 71 eine dem Arbeitsende 64 angepasste und damit ebenfalls die schiefe Ebene S aufweisenden Öffnung vorgesehen.

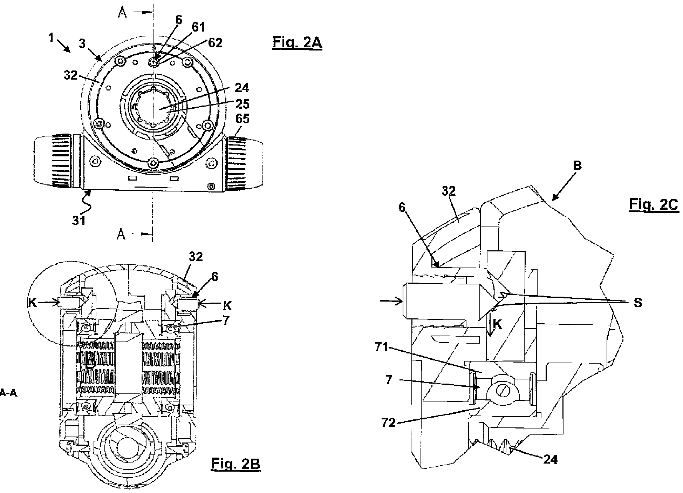

Anderem zum Schutz des Getriebes G ist als Teil des Gehäuses 3 axial beidseitig des Getrieberades 2 jeweils eine zur Getriebedrehachse g koaxial angeordnete ringförmige Abdeckung 32 mit einer Ringöffnung 33 vorgesehen. Die Abdeckung 32 ist radial außen an dem Gehäuse 3 festgelegt. Wenn funktionsnotwendig, so ist die Abdeckung 32 mit einer zentralen Ringöffnung 33 versehen, durch die die jeweils zugeordnete zentrale Öffnung 34 unverdeckt bleibt oder zumindest von außen zugänglich ist. Die Ringöffnung 33 kann auch zur Lagerung, insbesondere Gleitlagerung, der Antriebswelle 51, in der Motorwelle 52 und/oder des Hohlprofils 8 dienen. Die Größe der Ringöffnung 33 kann auf den jeweiligen Zweck, zum Beispiel zur Lagerung auf den jeweiligen Durchmesser der Wellen 51;52 oder des Hohlprofils 8, hin minimiert ausgelegt sein. Ferner kann, wie Figuren 2B und 2C entnehmbar, in der Abdeckung 32 die Einstellöffnung 62 eingebracht sein, in der das oben beschriebene Einstellelement 61 von außen zugänglich schraubbeweglich in der Abdeckung 32 gelagert angeordnet ist.

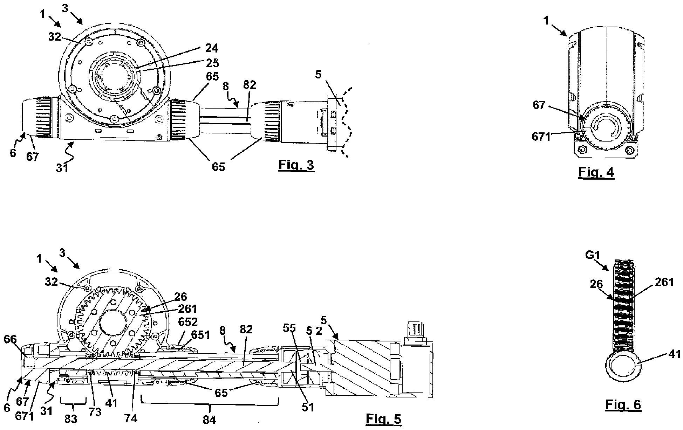

Das weitere Getriebeelement 4 ist bezüglich der Wirkachse w axial spielfrei zum Getrieberad 2 angeordnet. In der Ausführungsform des Armgelenks 1 gemäß den Figuren 1-6 ist das Getriebe G als Schneckengetriebe G1 mit dem abtriebsseitigen Getrieberad 2 als Schneckenrad 26 und dem antriebsseitigen weiteren Getriebeelement 4 als Schnecke 41 ausgebildet. Schneckenrad 26 und Schnecke 41 sind in Figur 6 ohne das übrige Armgelenk 1 in Gewindeeingriff gezeigt. Deutlich ist die übliche der Schnecke 41 angepasste Schrägverzahnung 261 des Schneckenrads 26. Wie Figur 5 entnehmbar, ist die Wirkachse w hier eine von einem Motor 5 direkt angetriebene Antriebswelle 51. Die Schnecke 41 ist in einem Klemmsitz auf der Antriebswelle 51 angeordnet.

Die Antriebswelle 51 ist, wie Figur 5 entnehmbar, geschützt in einem Hohlprofil 8 und zwar in einem vorgesehenen mittigen Innenkanal 81 des Hohlprofils 8 geführt angeordnet. Die Antriebswelle 51 ist ferner bezüglich der Wirkachse w axial beidseitig der Schnecke 41 jeweils über ein Lager 7 an dem Aufnahmeteil 31 drehbar gelagert. Die Justierung zur bezüglich der Wirkachse w axial spielfreien Lagerung des weiteren Getriebeelements 4 auf der Wirkachse w und damit des bezüglich der Wirkachse w axialen spielfreien Ineinanderwirken von Getrieberad 2 und weiterem Getriebeelement 4 erfolgt ähnlich der oben beschriebenen Einstellung zum bezüglich der Abstandsrichtung a axial spielfreien Ineinanderwirken von Getrieberad 2 und weiterem Getriebeelement 4. Hier erfolgt jedoch eine zur Wirkachse w axiale Verschiebung des Getrieberad 2 über seine Lager 7. Das Hohlprofil 8 selbst ist verdrehfest und verschiebungsfest zu dem Aufnahmeteil 31 angeordnet. Hierzu sind an beiden Seiten des Hohlprofils 8 hinterschnittene Aufnahmenuten 82 vorgesehen, in die zur verdrehfesten Lagerung des Hohlprofils 8 an dem Aufnahmeteil 31 vorgesehene Ankervorsprünge eingreifen.

Das Hohlprofil 8 ist in zwei Abschnitte, d.h. einen ersten Abschnitt 83 und einen zweiten Abschnitt 84, geteilt. Die beiden Abschnitte 83; 84 sind über die bezüglich der Wirkachse w axiale Erstreckung der die Antriebswelle 51 an dem Hohlprofil 8 anlagernden beiden Lager 7 und die axiale Erstreckung der Schnecke 41 voneinander beabstandet angeordnet. Dadurch ist der Bereich um die Schnecke 41 für das Schneckenrad 26 von außen zugänglich. Ferner wird eine konstruktiv unaufwändige Einstellung der Wirkverbindung zwischen Getrieberad 2 und weiterem Getriebeelement 4 bis hin zu einer bezüglich der Richtung der Wirkachse w axialen Spielfreiheit ermöglicht. Die beiden Abschnitte 83;84 greifen jeweils mit einem der Schnecke 41 zugewandten Ende stirnseitig an dem ihnen zugeordneten Lager 7, das heißt, jeweils bezüglich der Richtung von dem Justiergerät zu der Schnecke 41 hin, einem vorderen Lager 73 und einem hinteren Lager 74 an, wobei sie jeweils mit ihrem der Schnecke 41 abgewandten anderen Ende an dem Aufnahmeteil 31 widergelagert sind.

Der zweite Abschnitt 84, in Figur 5 rechts angeordnet, ist über ein Klemmelement 65 widergelagert. Dieses liegt in Arbeitsposition umfänglich hier unter Reibschluss radial außen an dem zweiten Abschnitt 84 an. Das Klemmelement 65 ist ferner verschraubbar an dem Aufnahmeteil 31 angeordnet. Das Klemmelement 65 ist so ausgelegt, dass es mit fortschreitender Verschraubung an dem Aufnahmeteil 31 umfänglich eine entsprechend wachsende radiale Reibkraft auf den zweiten Abschnitt 84 ausübt, die in dieser Anwendung einen Reibschluss mit dem zweiten Abschnitt 84 bewirkt.

Der erste Abschnitt 83, in Figur 5 links angeordnet, liegt mit seinem widergelagerten Ende stirnseitig kraftübertragungswirksam an einem Justiergerät 67 an. Dieses ist in Richtung der Wirkachse w verschraubbar an dem Aufnahmeteil 31 angeordnet. Das Justiergerät weist eine Stellvorrichtung 671 auf, über die der erste Abschnitt 83 unter axialer Verschiebung auf dem Hohlprofil 8 gegen das vordere Lager 73 gedrückt werden kann, welches dann gegen das weitere Getriebeelement bis zur Spielfreiheit hin gedrückt wird. Hierdurch kann das axiale Spiel der Wirkverbindung zwischen Getrieberad 2 und weiterem Getriebeelement 4 eliminiert werden. Die Stellvorrichtung 671 ist, wie beispielsweise Figur 4 entnehmbar, durch Verdrehung einer von außen zugänglichen Überwurfmutter betätigbar. Das Justiergerät 67 weist eine zur Wirkachse w axiale Sacköffnung 65 auf, in die die Antriebswelle 51 endseitig frei bleibend hineinragt. Freibleibend meint, ohne innenseitig an der Sacköffnung 65 anzuliegen.

Die oben beschrieben Lager 7 für das Getrieberad 2 wie die für das als Schnecke 41 ausgebildetes weitere Getriebeelement 4 sind in den in den Figuren gezeigten Ausführungsformen der Armgelenke 1 jeweils als Rollenlager eingezeichnet, worauf die Erfindung jedoch nicht beschränkt ist, da auch beliebig andere geeignete Lagerformen zu Einsatz kommen können. Alternativ können zumindest einige der Lager jeweils als Gleitlager, insbesondere Kunststoffgleitlager vorgesehen sein, die vorteilhaft schmiermittelfrei ausgelegt sind.

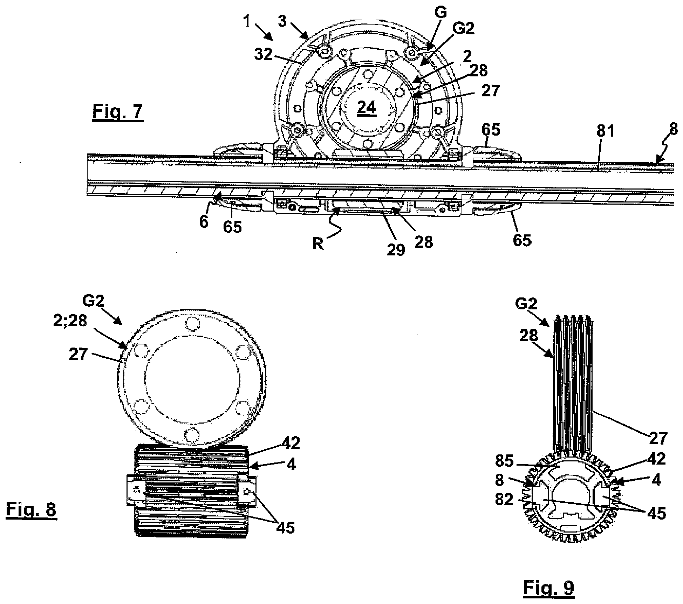

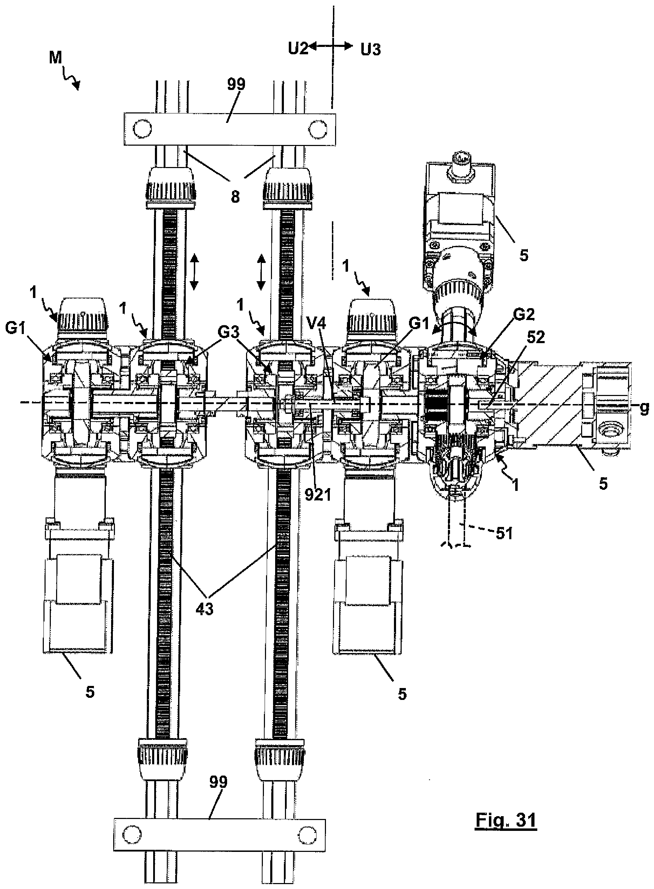

Figur 7 zeigt in einer bezüglich der Getriebedrehachse g Querschnittsansicht eine andere Ausführungsform des Armgelenks 1. Das Getriebe G ist hier als invertiertes Schneckengetriebe G2 ausgebildet. In Umkehrung zu dem Schneckengetriebe Gl, wird hier das Drehmoment antriebseitig über das Getrieberad 2 eingekoppelt und über das weitere Getriebeelement 4 abtriebsseitig an die Wirkachse w weitergegeben ausgekoppelt. Wie den Figuren 8 und 9 entnehmbar, weisen entsprechend das Getrieberad 2 als Stirnrad ein umfängliches Außengewinde 27 und das weitere Getriebeteil 4 eine Stirnverzahnung 42 auf. Das hier abtriebseitige Hohlprofil 8 bildet die Wirkachse w. Das weitere Getriebeelement 4 ist verdrehfest auf dem Hohlprofil 8 angeordnet. Das Hohlprofil 8 ist drehbeweglich über zwei axial voneinander beabstandete Klemmelemente 65 in dem Aufnahmeteil 31 gelagert. Die Klemmelemente 65 dienen hier zur Führung und Lagerung ohne Klemmung des Hohlprofils 8. Wie oben beschrieben, weist das Hohlprofil 8 einen Innenkanal 81 auf. Da der Innenkanal 81 in der Ausführungsform des Armgelenks gemäß Figur 7 nicht zur Ausbildung des invertierten Schneckengetriebes G2 benötigt wird, können andere Bauteile, wie Leitungen oder, wie beispielhaft in Figur 31 angedeutet, eine weitere Antriebswelle 51 für ein entferntes Armgelenk durch das Hohlprofil 8 geführt werden, ohne dass die weitere Antriebswelle 51 ein Drehmoment auf das Armgelenk 1 überträgt.

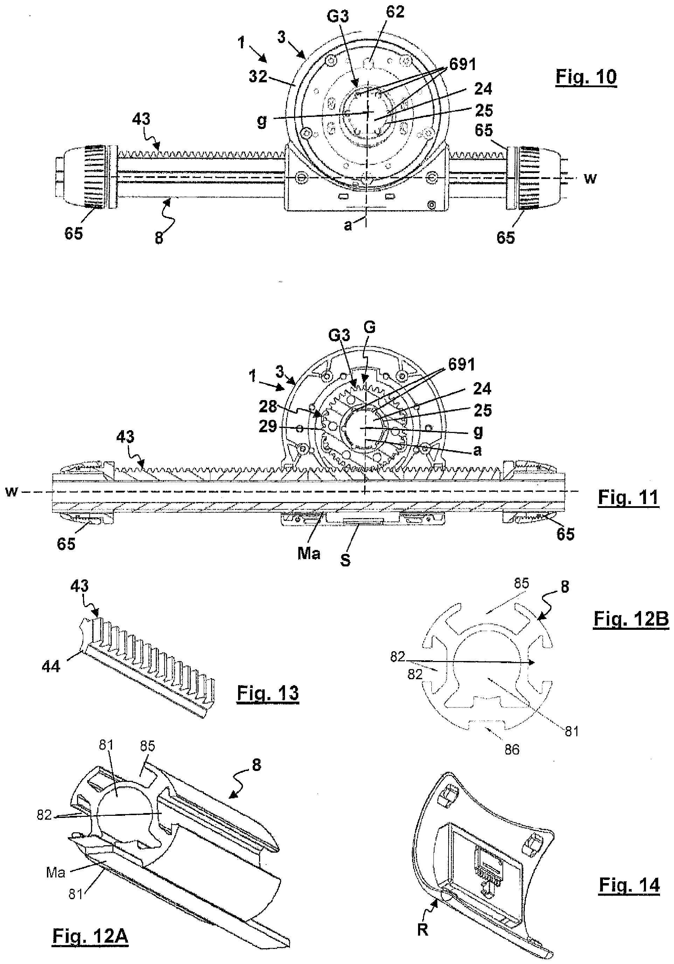

Figuren 10 und 11 geben jeweils eine Ansicht einer weiteren Ausführungsform des Armgelenks 1 wieder; in den Figuren 12 bis 13 sind jeweils einzelne Bauteile diese Ausführungsform gezeigt. Als Teil eines Lineargetriebes G3 sind das Getrieberad 2 als Stirnrad 28 und das weitere Getriebeelement 4 als Zahnstangenelement 43 ausgebildet. Das Zahnstangenelement 43 bildet die Wirkachse w. Das Zahnstangenelement 43 ist in Einbaulage in einer ersten Aufnahmenut 84 @@@@abgeordnet, die in Einbaulage zu dem Getrieberad hin geöffnet ist. Die erste Aufnahmenut 84 weist, wie auch die seitlichen Aufnahmenuten 82, einen Hinterschnitt auf. Das Zahnstangenelement 43 greift in Einbaulage über einen dem Hinterschnitt angepassten Fuß 44 in die erste Aufnahmenut 84 ein und ist hierdurch axial verdrehfest und radial verschiebungsfest an dem Hohlprofil gelagert. Ferner sind beidseitig des Zahnstangenelements 43 Klemmelemente 65 vorgesehen, die in einem Klemmsitz auf dem Hohlprofil 65 angeordnet sind und an denen das Zahnstangenelement 43 axial stirnseitig an Klemmelementen 65 anliegt. Damit wird das Zahnstangenelement 43 axial verschiebungsfest in der Aufnahmenut 84 gehalten. Die erste Aufnahmenut 84 ist zum Zahneingriff in das Getrieberad 2 zu demselben hin geöffnet angeordnet.

Figuren 12A und 12B wird das Hohlprofil 8 perspektivisch bzw. in einer Querschnittsdarstellung gezeigt. Neben den bereits erwähnten seitlichen Aufnahmenuten 82 zur verdrehfesten Anordnung des Hohlprofils 8 und der oberen Aufnahmenut 85 ist an der Unterseite eine untere Aufnahmenut 86 zur Aufnahme messtechnischer Bauteile vorgesehen, wobei hier beispielgebend ein Magnetstreifen Ma zur Wegmessung angeordnet ist. Eine zugehörige Sensorik R zur Wegmessung ist beispielgebend in Figur 14 gezeigt, wobei diese eine halbschalenartige Form aufweist und bezüglich der Wirkachse w mittig an dem Aufnahmeteil 51 festlegbar ausgebildet ist.

In den Figuren 19 bis 26B werden anhand von Seitenansichten, Schnittansichten und Einzeldarstellungen drei grundlegende Verbindungsformen zwischen mindestens zwei Armgelenken 1 gezeigt. Diese sind bezüglich der Getriebedrehachse g koaxial und stirnseitig parallel zueinander angeordnet. Sie weisen jeweils zumindest an den einander zugewandten Stirnseiten die zentrale Öffnung 24 auf, wobei diese beiden Öffnungen 24 zueinander fluchtend angeordnet sind. Die zumindest beiden Armgelenke 1 sind Teil einer Ausführungsform des Manipulators M. Zur Herstellung der Verbindung der Armgelenke 1 ist eine Verbindungsvorrichtung 9 mit Parallelverbinder 91 vorgesehen, mittels derer die Armgelenke 1 parallel und beabstandet zueinander und um eine gemeinsame Getriebedrehachse g drehbar gehalten angeordnet sind.

In den Figuren 19 bis 21 sind zwei Armgelenke 1 unter Ausbildung einer starren Verbindung V1 fest miteinander verbunden, das heißt, dass die Gehäuse 3 der zumindest zwei Armgelenke 1 und dass die Getrieberäder 2 der zumindest zwei Armgelenke 1 jeweils verdrehfest miteinander verbunden sind. Hierzu sind die beiden Getriebedrehachse g der beiden Armgelenke 1 über eine radial innenliegenden als Innenverbinder 92 ausgebildeten Parallelverbinder 91 drehfest miteinander verbunden. Ferner sind die Gehäuse 3 der beiden Armgelenke 1 über einen radial außenliegenden als Außenverbinder 93 ausgebildeten Parallelverbinder 91 drehfest miteinander verbunden. Wird somit ein Drehmoment in die Getriebedrehachse g des einen Armgelenks 1 eingekoppelt, so wird das Drehmoment unmittelbar auf die Getriebedrehachse g des anderen Armgelenks 1 und zwar 1:1 übertragen. Das gleiche gilt für die Einkopplung eines Drehmoments in das Gehäuse 3 eines Armgelenks 1 und dessen Übertragung auf das Gehäuse 3 des anderen Armgelenks 1.

Der Innenverbinder 92 und der Außenverbinder 93 sind jeweils in Einzeldarstellungen in den Figuren 21A und 21B bzw. in Figur 22 gezeigt. Der Innenverbinder 92 weist eine gestreckte Form mit jeweils einem Außengewinde 27 an beiden Enden auf, mit denen er verdrehfest in die beiden einander zugewandten Öffnungen 24 der beiden miteinander verbundenen Armgelenke 1 eingreift. Der Außenverbinder 93 weist eine Ringform auf, über deren axiale Erstreckung die beiden Armgelenke 1 beabstandet zueinander gehalten werden. Ferner sind axial beidseitig umfänglich gleich beanstandete und auf einem Radius angeordnete Steckvorsprünge 94 vorgesehen, die in Einbaulage axial in entsprechend an dem Gehäuse 3 vorgesehenen Stecköffnungen eingreifen. Durch den Innenverbinder 92 werden die beiden Armgelenke 1 axial zusammengehalten und axial gegen den Außenverbinder 93 gepresst gehalten.

Zur Verdrehsicherung der Gewindeeingriffe von Innengewinde 25 und Außengewinde 95 ist bei beiden Armgelenken 1 jeweils vorgesehen, dass mehrere gleich ausgebildete Blockierelemente 68, hier jeweils in Form eines Schraubelements 681, axial in einen Überlappungsbereich der beiden ineinander greifenden Gewinde 25;95 eingeschraubt sind, um hierüber eine relative Verdrehung der beiden Gewinde 25;95 zu blockieren. Damit ist gewährleistet, dass die beiden miteinander verbundenen Armgelenke 1 axial verschiebungsfest und verdrehfest gehalten sind.

Die hier acht Schraubelemente 681 sind auf einem Radius und umfänglich gleich beabstandet angeordnet. Jedem Schraubelement 681 ist eine zwischen die ineinander greifenden Gewinde 25;95 eingebrachte Blockieröffnungen 69 zugeordnet. Zur Ausbildung der Blockieröffnungen 69 sind in beide Gewinde 25;95 pro Blockieröffnung 69 jeweils eine axiale Nut 691 mit halbkreisförmigem Querschnitt eingebracht, wobei die dann beiden axialen Nuten 691 bei Gewindeeingriff, in einer bestimmten relativen Verdrehposition der beiden Gewinde 25;95 übereinander gebracht, in der sich die axialen Nuten 691 zumindest zu einer kreisförmigen Blockieröffnung 69 ergänzen. Somit können montageseitig die beiden Armgelenke 1 unter Beabstandung derselben über den Außenverbinder 93 und über den Gewindeeingriff des Innenverbinders in die beiden zentralen Öffnungen 24 soweit miteinander verschraubt werden, dass die Gewinde 25;95 der beiden Öffnungen 24 möglichst unter geringer Vorspannung spielfrei ineinandergreifen und sich zusätzlich die axialen Nuten 691 zu der jeweiligen Blockieröffnung 69 ergänzt haben, um dann in einem weiteren Schritt die Schraubelemente 681 in die jeweils zugeordnete Blockieröffnung 69 einzuschrauben. Durch den gleichen Vorgang kann, wenn sich beispielsweise im Betrieb durch Verschleiß Spiel einstellt, das Spiel eliminiert werden, wozu zuerst die Schraubenelemente 681 einer der beiden Öffnungen 24 gelöst werden müssen.

Die Einstellung zur Spielfreiheit des Gewindeeingriffs erfolgt somit schrittweise, das heißt hier bei acht Blockierelementen 68 beträgt der erstreckt sich der Abstand über einen Verdrehwinkel von 45°. Die Genauigkeit, in der die Spieleinstellung bzw. Spielfreiheit erfolgen kann, hängt somit unter anderem von der Anzahl der Blockierelemente 68 ab. Diese Art der Einstellung einer Spielfreiheit eines Gewindeeingriffs zweier ineinandergreifender Gewinde 25;95 wird auch bei anderen nachfolgend beschriebenen Ausführungsformen des Manipulator M eingesetzt.

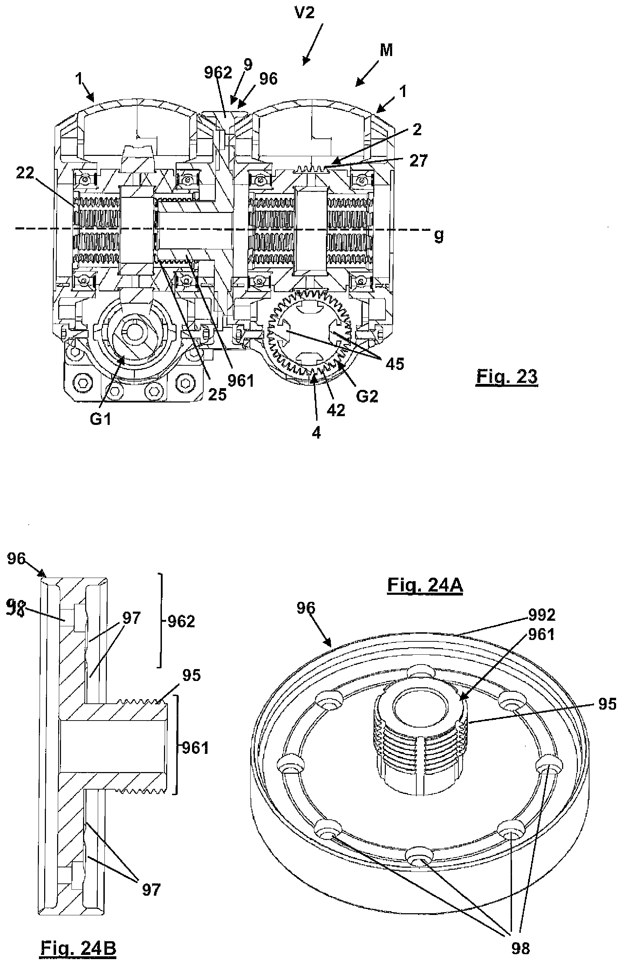

Gemäß Figur 23 sind zwei Armgelenke 1 unter Ausbildung einer Drehverbindung V2 bezüglich der Getriebedrehachse g drehbeweglich miteinander verbunden. Die Drehverbindung V2 erfolgte hier mittels eines Querverbinders 96. Der Querverbinder 96 weist eine gekröpfte Form auf und greift mit einem radial inneren gewindehülsenartigen Endabschnitt 961 unter Gewindeeingriff radial innen und axial in das Innengewinde 25 der zentralen Öffnung 24 des Getrieberads 2 des einen Armgelenks 1 axial verschiebungsfest ein. Auch hier wird mittels der zuvor beschriebenen Einstellvorichtung über Blockierelemente 68 der Gewindeeingriff nach Einstellung der Spielfreiheit gegen eine relative Verdrehung der Gewinde 25 blockiert. Mit dem anderen radial äußeren Endabschnitt 962 ist der Querverbinder 95 radial außen und axial an dem Gehäuse 3 des anderen Armgelenks 1 fest verbunden, das heißt, wie an den vorgesehenen Schraubenöffnungen 98 in Figur 24A ersichtlich, hier verschraubt, wobei die beiden Armgelenke 1 über die axiale Erstreckung des äußeren Endbereichs des Querverbinder 95 beabstandet gehalten werden.

Somit kann das von dem Getrieberad 2 des einen Armgelenks 1 in den Querverbinder 95 eingekoppelte Drehmoment auf das Gehäuse 3 des anderen Armgelenks 1 übertragen werden, so dass sich die beiden Armgelenke 1 bei Drehmomentübertragung bezüglich der Getriebedrehachse g relativ zueinander verdrehen. Um bei der relativen Verdrehung der beiden Armgelenke 1 auftretende Reibungsverluste radial außen zwischen dem Querverbinder 96 und dem Gehäuse 3 des einen Armgelenks 1 zu minimieren, weist der Querverbinder 96 seitlich axial zu dem einen Armgelenk 1 hin weisende Gleitflächen 97 auf, an denen allein das eine Armgelenk 1 radial außen an dem Querverbinder 96 anliegt.

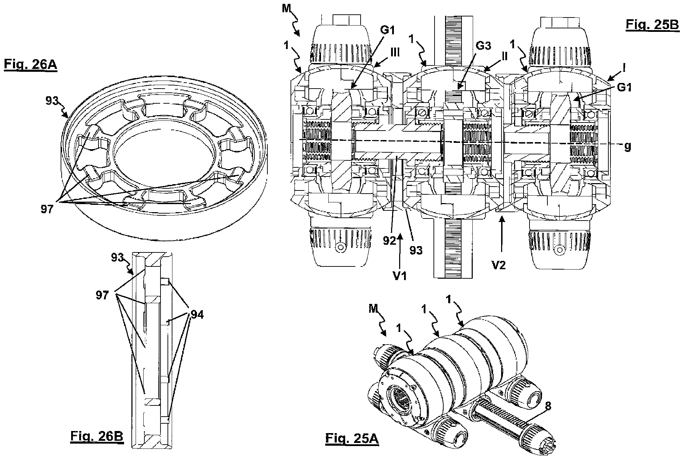

Beispielgebend wird anhand der Figuren 25 und 26 eine als weitere Verbindungsform eine Drehführung V3 zweier miteinander verbundenen Armgelenke 1 erläutert. Bei der Drehführung V3 werden zwei miteinander verbundene Armgelenke 1 aneinander geführt relativ zueinander verdreht. Diese relative Drehbewegung erfolgt jedoch passiv, d.h., dass die Drehbewegung nicht aktiv von einem der beiden Armgelenke 1 ausgeht. Im Gegensatz hierzu wird bei der Drehverbindung V2 die Drehbewegung aktiv von einem der beiden miteinander verbundenen Armgelenke 1 erzeugt. In den Figuren 25A und 25B wird eine weitere Ausbildungsform des Manipulator M mit drei miteinander verbundenen Armgelenken 1 gezeigt. Die Armgelenke 1 sind zur besseren Verdeutlichung in den Figuren zusätzlich durch die römischen Zahlen I-III gekennzeichnet. Jeweils gemäß Figur 25B, ist das Armgelenk I rechts, das Armgelenk III links und das Armgelenk II mittig zwischen den beiden Armgelenken I und II angeordnet. Wie der Längsschnittdarstellung hier parallel zu den parallel zu den in Figur 25A gezeigten Wirkachsen w der Armgelenke I-III entnehmbar, besteht zwischen dem Armgelenk I und dem Armgelenk II die bereits oben erläuterte Drehverbindung V2, wobei das Armgelenk I ein Schneckengetriebe G1 und das Armgelenk II ein Lineargetriebe aufweisen. Hierbei wird ein Drehmoment vom dem Schneckenrad 2 des Armgelenk I auf das Gehäuse 3 des Armgelenks II eingekoppelt, wodurch dieses gegenüber dem Armgelenk I verdreht wird. Die Getrieberäder 2 der beiden Armgelenke II und I sind über einen Innenverbinder 92 verdrehfest und verschiebungsfest miteinander verbunden. Über den Innenverbinder 92 wird somit das Stirnrad 28 des Linearantrieb G3 des Armgelenks II verdreht, wobei das Stirnrad 28 abtriebsseitig das Zahnstangenelement 43 kämmt und linear in Richtung der Wirkachse w bewegt.

Ferner ist ein Außenverbinder 93 vorgesehen. Wie den Figuren 26A und 26B entnehmbar, sind, wie bei der Drehverbindung V2, an der abtriebsseitigen Stirnseite Steckvorsprüngen 94 und an der antriebsseitigen Stirnseite Gleitflächen 97 vorgesehen. D.h., dass der Außenverbinder 93, jeweils radial außen, verdrehfest mit dem Gehäuse 3 des Armgelenks II und drehgleitbeweglich mit dem Gehäuse 3 des Armgelenks III verbunden ist. Wird das Armgelenk II durch das Armgelenk I aktiv verdreht, so wird das Armgelenk II zugleich an dem Armgelenk III drehgleitbeweglich geführt.

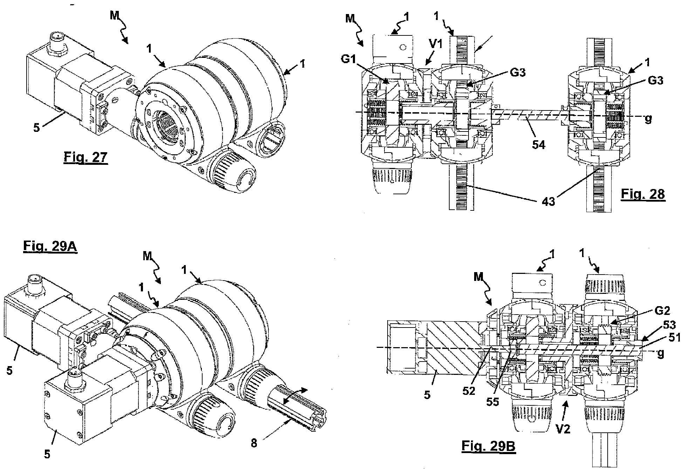

In den Figuren 27-28 sowie 29A-29B werden drei weitere Möglichkeiten zur Verbindung von Armgelenken 1 gezeigt, die jeweils antriebsseitig über ein Schneckenantrieb G1 angetrieben werden. Die beiden in Figur 27 dargestellten Armgelenke 1 sind in Figur 28 und die beiden in Figur 29A dargestellten Armgelenke 1 sind in Figur 29B jeweils in einer Längsschnittdarstellung gezeigt. Hiernach weist das in den Figuren 27-29 jeweils linke Armgelenk 1 einen Schneckenantrieb G1 auf. Die Schnecke 41 des Schneckenantrieb G1 wird von einem von einem zum Armgelenke 1 beabstandet angeordneten Motor 5 angetrieben. Ferner weist das an das linke Armgelenk 1 anschließende Armgelenk 1 gemäß Figur 28 einen Linearantrieb G3 auf. Die beiden benachbarten Armgelenke sind gemäß Figur 28 über eine starre Verbindung V1 miteinander verbunden, so dass das von dem Schneckenrad 26 des einen Armgelenks 1 in das Stirnrad 28 des anderen Armgelenks 1 eingekoppelte Drehmoment über das Lineargetriebe G3 in eine Linearbewegung des Zahnstangenelements 43 umgewandelt wird.

In der Ausführungsform des Manipulators M gemäß Figur 28 ist ein weiteres Armgelenk 1 mit Lineargetriebe G3 vorgesehen, welches beabstandet zu dem anderen Armgelenk 1 mit Lineargetriebe G3 angeordnet ist. Zur Drehmomentverbindung mit dem anderen Armgelenk 1 ist ein die Beabstandung überbrückender Antriebswellenabschnitt 54 vorgesehen. Dieser ist drehfest mit den Stirnrädern 28 der beiden Lineargetriebe G3 verbunden, so dass die beiden Linearantriebe G3 synchron über das Schneckengetriebe G1 angetrieben werden. Der Antriebswellenabschnitt 54 ist beidendseitig jeweils über eine Anschlusselement 53 an den einander zugewandten zentralen Öffnungen 34 der Armgelenke 1 drehbar gelagert. Hierzu steht das Anschlusselement 53 mit einem Außengewinde 27 in einem oben beschriebenen spielfreien Gewindeeingriff mit dem Innengewinde 25 der jeweils zugeordneten zentralen Öffnungen 34. Dieses Anschlusselement 53 ist beispielgebend in einer Einzeldarstellung gemäß den Figuren 18C und 18D gezeigt.

In der Ausführungsform des Manipulators M gemäß den Figuren 29A und 29B ist ein weiterer Motor 5 vorgesehen, der mit seiner Motorwelle 52 bezüglich der Getriebedrehachse g stirnseitig an dem Armgelenk 1 mit Schneckengetriebe G1 angekoppelt und über eine Kupplung 55 mit der Antriebswelle 51 verbunden ist. Die Antriebswelle 51 durchgreift das Armgelenk 1 mit dem Schneckengetriebe G1 ohne ein Drehmoment an dieses Armgelenk 1 zu übertragen. Die beiden miteinander verbundenen Armgelenke 1 ist in der von den beiden Armgelenken 1 abgewandten zentralen Öffnung 24 wie oben beschrieben gelagert. Hierbei ist er verdrehfest mit dem Getrieberad 2 des invertierten Schneckenantriebs G2 verbunden. Somit wird das Hohlprofil 8 über den weiteren Motor 5 in Drehbewegung versetzt.

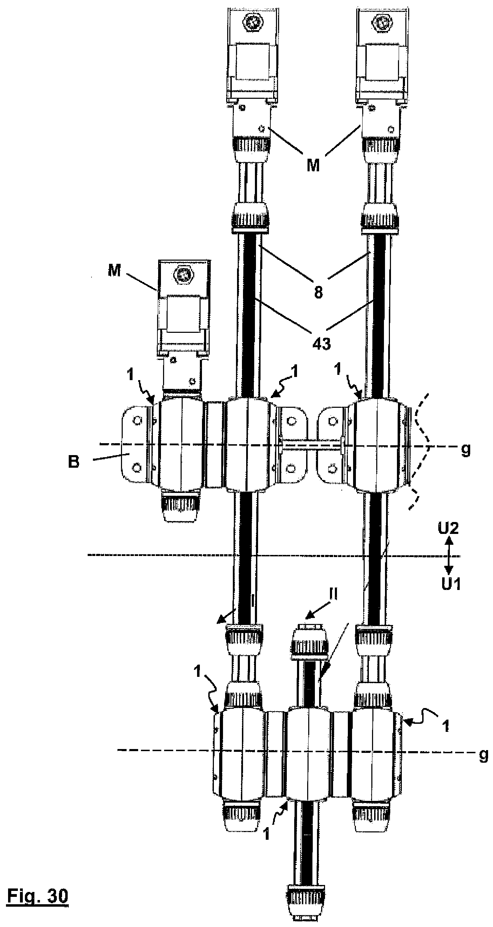

In der Ausbildungsform des Manipulators M gemäß Figur 30 können die Armgelenke 1 von ihrem Funktionszusammenhang her in eine erste Gruppe U1 und eine zweite Gruppe U2 eingeteilt werden, wobei die in Figur 30 unten angeordnete erste Gruppe U1 bereits anhand Figur 25 und die in Figur 30 oben angeordnete zweite Gruppe U2 bereits anhand Figur 28 näher erläutert wurden. Abweichend hierzu sind die Armgelenke 1 der zweiten Gruppe hier an einer Basis B angelagert, wobei die Armgelenke 1 der ersten Gruppe arbeitskopfseitig des Manipulators M angeordnet sind. In der zweiten Gruppe werden die beiden über den Antriebswellenabschnitt 54 beabstandeten Armgelenke 1 und damit die zugehörigen jeweils in einem Hohlprofil 8 angeordneten Zahnstangenelemente 43 parallel und synchron verfahren. An dem oben angeordneten freien Enden der Hohlprofile 8 ist jeweils ein Motor 5 vorgesehen, der ein Drehmoment in eine in dem jeweils zugeordneten Hohlprofil geführte Antriebswelle einkoppelt und hierüber die beiden äußeren Gelenke 1 der ersten Gruppe antreibt. Deutlich wird, dass dem Manipulator M dank der Armgelenke 1 eine raumgreifende Bewegung ermöglicht wird.

In der Ausführungsform des Manipulators M gemäß Figur 31 können die eingesetzten Armgelenke 1 ebenfalls in zwei Gruppen U2;U3 gegliedert werden. Die eine Gruppe ist die bereits erwähnte zweite Gruppe U2 und in Figur 31 links angeordnet. Da die jeweils an einem Hohlprofil 8 angebrachten Zahnstangenelemente 43 parallel zueinander gehalten synchron linear verfahren werden, können sie, wie in Figur 31 vorgesehen, zu ihrer Stabilisierung über Querstege 99 fest miteinander verbunden sein. Die Armgelenke 1 beider Gruppen U2;U3 sind koaxial zu einer Getriebedrehachse g angeordnet.

Zwischen den beiden Armgelenken 1 der anderen Gruppe U3 besteht eine bereits weiter oben in Verbindung mit Figur 23 beschriebene Drehverbindung V2, wobei das in Figur 31 linke Armgelenk 1 das in Figur 31 rechte Armgelenke 1 antreibt. Das linke Armgelenk 1 weist einen Schneckenantrieb G1 auf, während das hier rechte Armgelenk 1 mit einem invertiertem Schneckengetriebe G2 ausgestattet ist. Das durch das rechte Armgelenk 1 durchgeführte Hohlprofil 8 wird über somit das invertierte Schneckengetriebe G2 des rechten Armgelenks 1 angetrieben, das seinerseits mit einem bezüglich der Getriebedrehachse g Drehmoment übertragungswirksam angreifenden Motor 5 stirnseitig gekoppelt ist. Ferner ist stirnseitig zu diesem Hohlprofil 8 ein weiterer Motor 5 gekoppelt, der eine in dem Hohlprofil 8 geführte Antriebswelle 51 für einen hier nicht weiter dargestellten Zweck antreibt. Diese Antriebswelle 51 ist, da im Hohlprofil 8 verdeckt angeordnet, endseitig lediglich durch gestrichelte Linien angedeutet.

Zwischen den beiden Armgelenken 1 der beiden Gruppen U2;U3, die unmittelbar zueinander benachbart sind, besteht eine weitere noch nicht erläuterte Verwendungsform, indem deren Gehäuse 3 über einen Außenverbinder 93 verdrehfest und über eine Schraubverbindung V4 Drehmoment übertragungsunwirksam einander verbunden sind.

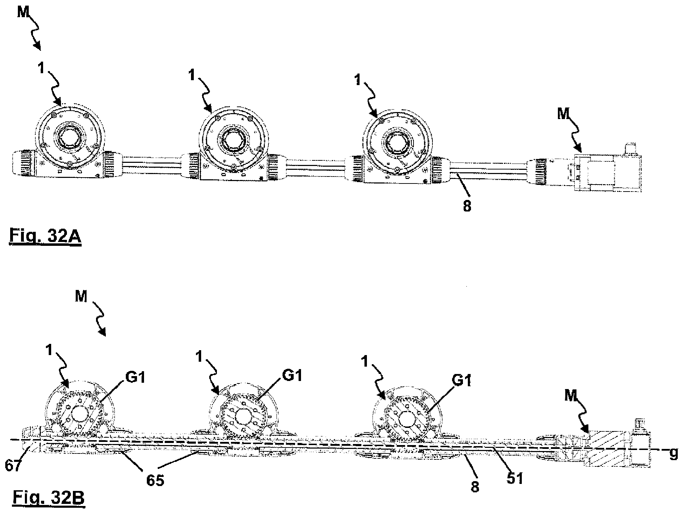

Gemäß Figur 32 weist der Manipulator M drei bezüglich der Drehmomentübertragung 3 hintereinander angeordnete im Wesentlichen baugleiche Armgelenke 1 jeweils mit Schneckengetriebe G1 auf, deren Schnecken 41 von einer die Armgelenke 1 durchlaufenden einzigen Antriebswelle 51 angetrieben werden.

Die Getriebebauteile, wie Getrieberad 2 und weiteres Getriebebauteil 4, sind so modular ausgebildet sind, dass die Armgelenke 1 in all ihren hier beschriebenen Ausführungsformen unaufwändig montierbar und austauschbar sind. Der Manipulator M, Motor 5, Armgelenk 1, Hohlprofil 8 und/oder die Bauteile, insbesondere Getriebebauteile in ihren verschiedenen Modifikationen und Baugrößen, sind jeweils modular aufgebaut und daher leicht montierbar und austauschbar.

### Bezugszeichenliste

- 1: Armgelenk
- 2: Getrieberad
- 21: Stirnseite
- 22: Adapter
- 221: Steckvorsprung
- 222: Stecköffnung
- 223: Führungseinsatz
- 23: Seite
- 24: Öffnung
- 25: Innengewinde
- 26: Schneckenrad
- 261: Schrägverzahnung
- 27: Außengewinde
- 28: Stirnrad
- 29: Außenverzahnung
- 3: Gehäuse
- 31: Aufnahmeteil
- 32: Abdeckung
- 33: Ringöffnung
- 4: weiteres Getriebeelement
- 41: Schnecke
- 42: Stirnverzahnung
- 43: Zahnstangenelement
- 44: Fuß
- 45: Ankerelement
- 5: Motor
- 51: Antriebswelle
- 52: Motorwelle
- 53: Anschlusslagerung
- 54: Antriebswellenabschnitt
- 55: Kupplung
- 6: Einstellvorrichtung
- 61: Einstellelement
- 62: Einstellöffnung
- 621: Einstellausnehmung
- 63: Gewindeschaft
- 64: Arbeitsende
- 65: Klemmelement
- 651: innere Schraubhülse
- 652: äußere Schraubhülse
- 66: Sacköffnung
- 67: Justiergerät
- 671: Stellvorrichtung
- 68: Blockierelement
- 681: Schraubelement
- 69: Blockieröffnung
- 691: Nut
- 7: Lager
- 71: erster Lagerring
- 72: zweiter Lagerring
- 73: vorderes Lager
- 74: hinteres Lager
- 8: Hohlprofil
- 81: Innenkanal
- 82: seitliche Aufnahmenut
- 83: erster Abschnitt
- 84: zweiter Abschnitt
- 85: obere Aufnahmenut
- 86: untere Aufnahmenut
- 9: Verbindungsvorrichtung
- 91: Parallelverbinder
- 92: Innenverbinder
- 921: Innenschraubverbindung
- 93: Außenverbinder
- 94: Steckvorsprung
- 95: Außengewinde
- 96: Querverbinder
- 961: innerer Endbereich
- 962: äußerer Endbereich
- 97: Gleitfläche
- 98: Schraubenöffnung
- 99: Quersteg
- a: Abstandsrichtung
- g: Getriebedrehachse
- w: Wirkachse
- B: Basis
- E: Einstellkraft
- G: Getriebe
- G1: Schneckengetriebe
- G2: invertiertes Schneckengetriebe
- G3: Lineargetriebe
- M: Manipulator
- Ma: Magnetstreifen
- R: Sensorik
- S: schiefe Ebene
- V1: starre Verbindung
- V2: Drehverbindung
- V3: Drehführung
- V4: Schraubverbindung
- U1: erste Gruppe
- U2: zweite Gruppe
- U3: dritte Gruppe

## Patentansprüche

1. Armgelenk für einen Manipulator (M), der einen Motor (5) mit einem Getriebe (G) aufweist, wobei das Armgelenk (1) ein um eine Getriebedrehachse (g) drehbares Getrieberad (2) aufweist, wobei das Getrieberad (2) in einem Gehäuse (3) des Armgelenks (1) drehbar gelagert angeordnet ist und an zumindest einer seiner Stirnseiten (21) einen Adapter (22) aufweist und wobei der Adapter (22) an seiner von der Stirnseite (21) der Getrieberades (2) abgewandten Seite (23) eine bezüglich der Getriebedrehachse (g) zentrale Öffnung (24) aufweist, wobei das Gehäuse(3) ein Aufnahmeteil (31) zur Aufnahme eines weiteren Getriebeelementes (4) aufweist, das quer zur Getriebedrehachse (g) angeordnet ist und mit der Peripherie des Getrieberades (2) in Wirkverbindung steht, **dadurch gekennzeichnet, dass** eine Einstellvorrichtung (6) zur spielfreien Anordnung des Getrieberades (2) und/oder des weiteren Getriebeelementes (4) zum Gehäuse (3) sowie/oder zwischen dem Getrieberad (2) und dem weiteren Getriebeelement (4) vorgesehen ist, mit der ein Spiel zwischen den genannten Bauteilen nachjustiertbar ist.

2. Armgelenk nach Anspruch 1, **dadurch gekennzeichnet, dass** das weitere Getriebeelement(4) eine in einer Abstandsrichtung (a) zur Getriebedrehachse (g) beabstandete Wirkachse (w) aufweist, über die das weitere Getriebeelement (4) in oder an dem Aufnahmeteil (31) des Gehäuses (3) gelagert ist, die Getriebedrehachse (g) und die Wirkachse (w) parallel zu einer Ebene angeordnet sind, die sich senkrecht zu einem in Abstandsrichtung (a) verlaufenden Abstand zwischen Wirkachse (w) und Getriebedrehachse (g) erstreckt, wobei das Getrieberad (2) und das weitere Getriebeelement (4) zur Einstellung einer bezüglich der Abstandsrichtung (a) axialen Spielfreiheit in Abstandsrichtung (a) relativ zueinander bewegbar angeordnet sind.

3. Armgelenk nach Anspruch 2, **dadurch gekennzeichnet, dass** die Lagerung für das Getrieberad (2) einen dem Gehäuse (3) zugeordneten ersten Lagerring (71) und einen dem Getrieberad (2) zugeordneten zweiten Lagerring (72) aufweist und dass die Einstellung der bezüglich der Abstandsrichtung (a) axialen Spielfreiheit über eine in Abstandsrichtung (a) wirksame schiefe Ebene (S) erfolgt, über die in Richtung von dem Getrieberad (2) zu dem weiteren Getriebeelement (4) hin eine Einstellkraft (K) in den ersten Lagerring (71) einkoppelbar ist.

4. Armgelenk nach Anspruch 3, **dadurch gekennzeichne**t, **dass** zu der Einstellung ein an dem Gehäuse (3) quer zur Abstandsrichtung (a) bewegbar gelagerten Einstellelement (61) vorgesehen ist, das unter Erzeugung der Einstellkraft (K) an der schiefen Ebene (S) abgleitet.

5. Armgelenk nach Anspruch 4, **dadurch gekennzeichnet, dass** das Einstellelement (61) als Schraubbolzen mit kegelförmigen Arbeitsende (64) ausgebildet ist, mit dem der Schraubbolzen quer zur Abstandsrichtung (a) an der am ersten Lagerring (71) vorgesehenen schiefen Ebene (S) abgleitet.

6. Armgelenk nach einem der Ansprüche 2 bis 5,
**dadurch gekennzeichnet, dass** das Getriebe als Schneckengetriebe (G1) mit Schneckenrad (26) und Schnecke (41) ausgebildet ist, wobei das weitere Getriebeelement (4) als Schnecke (41) und die Wirkachse (w) als Antriebswelle (51) ausgebildet sind, auf der die Schnecke (41) verdrehfest angeordnet ist und die axial beidseitig der Schnecke (41) an oder in dem Aufnahmeteil (31) drehbeweglich gelagert ist.

7. Armgelenk nach Anspruch 6, **dadurch gekennzeichnet, dass** die Antriebswelle (51) in einem Hohlprofil (8) geführt angeordnet ist, das verdrehfest und verschiebungsfest zum Aufnahmeteil (31) an und/oder in demselben angeordnet ist.

8. Armgelenk nach Anspruch 7, **dadurch gekennzeichnet, dass** das Hohlprofil (8) zwei zumindest über die axiale Erstreckung der Schnecke (41) voneinander beabstandete Abschnitte, d.h. einen ersten Abschnitt (83) und einen zweiten Abschnitt (84), aufweist, wobei zumindest der erste Abschnitt (83) zur Einstellung einer bezüglich der Richtung der Wirkachse (w) axialen Spielfreiheit des Eingriffs von Schneckenrad (26) in Schnecke (41) über ein vorgesehenes Justiergerät (67) der Einstellvorrichtung (6) zu der Schnecke (41) hin axial bewegbar angeordnet ist.

9. Armgelenk nach Anspruch 8, **dadurch gekennzeichnet, dass** sich der erste Abschnitt (83) des Hohlprofils(8) mit einem Ende stirnseitig an dem Justiergerät(67) und mit dem anderen Ende stirnseitig an dem bezüglich einer Richtung von dem Justiergerät (67) zu der Schnecke (41) hin vorderen Lager abstützt und dass sich der zweite Abschnitt des Hohlprofils (8) mit einem Ende stirnseitig an dem bezüglich der Richtung von dem Justiergerät(67) zu der Schnecke (41) hin hinteren Lager (7) abstützt, wobei das andere Ende über ein vorgesehenes Klemmelement (64) an dem Aufnahmeteil (31) widergelagert ist.

10. Armgelenk nach Anspruch 8 oder 9, **dadurch gekennzeichnet, dass** das Justiergerät (67) eine zur Wirkachse (w) axiale Sacköffnung (66) aufweist, in die die Antriebswelle (51) mit einem freien Ende hineinragend drehbar gelagert ist, wobei das Justiergerät (67), stirnseitig gegen den ersten Abschnitt (83) des Hohlprofils (8) anliegend, axial in Richtung zu der Schnecke (41) hin verschraubbar an dem Aufnahmeteil (31) angeordnet ist.

11. Armgelenk nach einem der Ansprüche 2 bis 5,
**dadurch gekennzeichnet, dass** das Getriebe (G) als invertiertes Schneckengetriebe (G2) mit antriebsseitigem Getrieberad (2) und abtriebsseitigem weiterem Getriebeelement (4) ausgebildet ist, wobei die Wirkachse (w) als antreibbares Hohlprofil (8) mit einem Innenkanal (81) zur Durchführung einer Antriebswelle (51), wie Motorwelle (52), ausgebildet ist, das Schneckenrad (26) verdrehfest auf dem Hohlprofil (8) angeordnet ist und das Hohlprofil (8) drehbeweglich an oder in dem Aufnahmeteil (31) gelagert ist.

12. Armgelenk nach Anspruch 11, **dadurch gekennzeichnet, dass** das Getriebe (G) als Lineargetriebe (G3) ausgebildet ist, wobei das Getrieberad (2) eine Stirnverzahnung (42) und das weitere Getriebeelement (4) als Zahnstangenelement (43) ausgebildet sind.

13. Manipulator mit zumindest einem Armgelenk (19) gemäß einem der Ansprüche 1 bis 12.

14. Manipulator nach Anspruch 13, **dadurch gekennzeichnet, dass** zumindest zwei Armgelenke (1) vorgesehen sind, die mittels einer vorgesehenen Verbindungsvorrichtung (9) in einer Verbindungsposition kraft-, bewegungs- und/oder führungswirksam miteinander verbunden sind.

15. Manipulator nach Anspruch 14, **dadurch gekennzeichnet, dass** die zumindest zwei Armgelenke (1) bezüglich der Getriebedrehachse (g) einander zugewandt koaxial fluchtend angeordnet sind, wobei die einander zugewandten Stirnseiten (21) jeweils eine zur Getriebedrehachse (g) zentrale Öffnung (24) aufweisen.

16. Manipulator nach Anspruch 14 oder 15, **dadurch gekennzeichnet, dass** die zumindest zwei Armgelenke (2) in einer Verbindungsposition mittels einer Parallelverbinder (91) aufweisenden Verbindungsvorrichtung (9) bezüglich einer Ebene senkrecht zu der Getriebedrehachse (g) parallel beabstandet zueinander und koaxial zu der Getriebedrehachse (g) angeordnet sind.

17. Manipulator nach Anspruch 16, **dadurch gekennzeichnet**, das s die beiden Armgelenke (1) fest miteinander verbunden sind, indem die Getriebedrehachsen (g) der beiden Armgelenke (1) über einen radial innen liegenden als Innenverbinder (92) ausgebildeten Parallelverbinder (91) und die Gehäuse (3) der beiden Armgelenke (1) über einen radial außen liegenden als Außenverbinder (93) ausgebildeten Parallelverbinder (91) jeweils drehfest miteinander verbunden sind.

18. Manipulator nach Anspruch 16, **dadurch gekennzeichnet**, das s die beiden Armgelenke (1) drehbeweglich über sich quer zur Getriebedrehachse (g) erstreckenden als Querverbinder(96) ausgebildeten Parallelverbinder (91) miteinander verbunden sind, wobei der Querverbinder (96) mit einem radial innen liegenden Endabschnitt (961) verdrehfest, insbesondere verdreh- und verschiebungsfest, mit der Getriebedrehachse (g) eines der beiden Armgelenke (1) sowie ferner mit einem radial außenliegenden Endabschnitt (962) gleit- oder rolldrehbeweglich mit dem Gehäuse (3) des einen Armgelenks (1) und fest mit dem Gehäuse (3) des anderen Armgelenks (1) verbunden ist.

19. Manipulator nach Anspruch 16, **dadurch gekennzeichnet**, das s die beiden Armgelenke (1) unter Ausbildung einer Drehführung (V3) des einen Armgelenks (1) an dem anderem Armgelenk (1) verbunden sind, indem die Getriebedrehachsen (g) der beiden Armgelenke (1) über einen radial innen liegenden als Innenverbinder (92) ausgebildeten Parallelverbinder (91) fest sowie indem die Gehäuse (3) der beiden Armgelenke (1) über einen radial außen liegenden als Außenverbinder (93) ausgebildeter Parallelverbinder (91) verbunden sind, wobei der Außenverbinder (93) verdrehfest mit dem Gehäuse (3) des einen Armgelenks (1) und gleit- oder rollbeweglich mit dem Gehäuse (3) des anderen Armgelenks (1) verbunden ist.

20. Manipulator nach einem der Ansprüche 16 bis 19, **dadurch gekennzeichnet, dass** die Parallelverbinder (91) in der Verbindungsposition Drehmoment übertragungswirksam in eine der einander zugewandten zentralen Öffnungen oder in beide zugewandte zentralen Öffnungen eingreifen.

21. Manipulator nach einem der Ansprüche 18 bis 20, **dadurch gekennzeichnet, dass** das Armgelenk (1) und der zum Armgelenk (1) zugehörige Motor (M) beabstandet zueinander angeordnet sind.

22. Manipulator nach einem der Ansprüche 18 bis 21, **dadurch gekennzeichnet, dass** er modular aufgebaut und gemäß einem Baukastenprinzip aus einzelnen Modulen montierbar ist.
